# EUROPEAN PATENT APPLICATION

(11) **EP 1 787 924 A1**
(43) Date of publication of application: **23.05.2007**
(21) Application number: 05782208.2
(22) Date of filing: 06.09.2005
(51) Int. Cl.: B65G 1/137

(54) **COMMODITY INCOMING/OUTGOING MANAGEMENT SYSTEM**

(30) Priority: 07.09.2004 JP 2004259210
(71) Applicant: MATSUSHITA ELECTRIC INDUSTRIAL CO., LTD., Kadoma-shi, Osaka 571-8501 (JP)
(72) Inventor: FUKAMACHI, Masahiro, (JP)
(74) Representative: Haley, Stephen
(86) International application number: PCT/JP2005/016327
(87) International publication number: WO 2006/028086

(57) **Abstract**

There is provided a commodity incoming/outgoing management system for managing incoming/outgoing of a commodity. The system includes: a first identifier storage device attached to a commodity and capable of storing first information; an information write unit for recording the first information in the first identifier storage device; a first information read unit for reading the first information from the first identifier storage device attached to a commodity; and a first information processing device for receiving the first information read by the first information read unit and processing the information on incoming/outgoing of the commodity to which the first identifier information storage device is attached according to the information received.

## Description

### Technical Field

The present invention relates to a system for managing distribution of commodities. More specifically, the present invention relates to a system for managing incoming and outgoing or commodities at a place where commodities are collected and distributed.

### Background Art

Conventionally, at a place (warehouse etc.) where commodities are collected and distributed, management of incoming and outgoing commodities has been performed by a person in charge, who cross-checks a group of the incoming or outgoing commodities and a incoming or outgoing slip respectively. Also in the case of displacement of a commodity in a yard of a collection/distribution center yard, persons in charge manage a handover and a whereabout of the commodity among themselves by using a slip.

For example, in a repair industry which repairs an electric home appliance, repair parts are managed as follows. The repair parts are conveyed from a manufacturing center to a parts warehouse and stored therein so that any one of the parts can be retrieved in response to a repair request. And then, repair parts not used in the repair are stored in the parts warehouse again. Below, it will be described more specifically.

When an electric home appliance breaks down, a customer requests an electric appliance retailer where he or she bought it or a repair company by phone etc.

When having received the repair request, a person in charge for receiving a repair request inquires customer information to the customer, puts (inputs) the customer information into a reception form, and transmits it to a manager of a service base point which takes charge of an area including an address of the customer.

The service base point manager allots (referred to as command, hereinafter) the obtained reception form to one or more his or her (plurality of) repair persons, taking into account a repairing ability of each of them.

The each repair person in charge reviews the delivered reception forms, makes an ordering of operations, phones the customers to get customer's consent for visiting date/time in the order, estimates the status of the trouble and decides how to repair it based on information written in the reception form, estimates parts to be required for repair, and picks up parts stored at the service base point.

However, because of limitations on storing place and storable resources, variety and a number of repair parts in stock at the service base point are limited. When a repair part considered to be necessary for repairing is not available in the service base point, an order for the repair part is placed online to the parts warehouse.

When having received the order, a person in charge or the parts warehouse searches for the necessary repair part stored in parts shelves by using a management terminal, takes a palette from the parts shelves by operating an automatic traveling palette conveyer so that the necessary repair part may be picked up, attaches a pre-created part shipment slip for shipping parts and a newly created shipment slip to the repair parts, and consigns it to a transport agent.

When having received the repair part from the transport agent, a person in charge of parts management of the service base point cross-checks the repair parts with the part shipment slip, a part slip, and the shipment slip to verify the reception and hands the repair parts to the repair persons in charge, who ordered those repair parts.

The repair person in charge (technician) visits the customer's home and completes repair work. Then, he gets back to the service base point and returns repair parts which were not used in the repair work to a container.

The person in charge of parts management at the service base point confirms contents of the container, creates a return slip, attaches it to the repair parts not used in a manner that it can be easily recognized visually, and consigns them to a transport agent so that they may be returned to the parts warehouse.

The person in charge at the parts warehouse performs a returned-parts processing on the parts not used and returned by using the return slip and houses the repair parts at a specified parts shelf in the parts warehouse by using a automatic traveling palette conveyer.

The person in charge at the parts warehouse visually recognizes a part code, a part name, etc. indicated on surfaces of individual packages of the repair parts to identify each of them (see, for example, Paragraph 0077, Figs. 11 and 12 of JP-A-2002-222280).
Patent Document 1: Japanese Patent Application Laid Open Publication No. 2002-222280.

### Disclosure of Invention

### Problem to be solved by the invention

However, in the above-mentioned method, commodities are identified by visual recognition by a person in charge of the parts warehouse and processes for confirming the incoming and outgoing to/from the warehouse are performed using slips. Troublesome and complicated operations are mostly performed manually by persons in charge of the parts warehouse. Therefore, the visual recognition and handling of slips by persons in charge of the parts warehouse are always needed for a link from one operation to another operation. Hence, commodities would be easily mixed up and be designated to a wrong destination or on a wrong delivery date which should result in a misdelivery or a shortage of commodities.

Also at a place where commodities are received, a person in charge of parts management of the service base point cross-checks the received parts and their slips for checking whether any misdelivery or shortage has arisen or not. Therefore, he or she has to bear a heavy workload.

Such problems may exist not only in a job of delivering a commodity from a warehouse but also similarly in a job of accounting at a checkstand in a supermarket etc. A person in charge of the accounting behind the cash register may mistakenly enter a retail price of an article or fail to enter it in some cases. An unskilled person in charge or accounting at the checkstand may take a significant time in processing of cash register accounting, thus discomforting a customer.

To solve these problems, the present invention has been developed, and it is an object of the present invention to provide a system that can accurately and rapidly manage incoming and outgoing commodities in a commodity management job at a place where the commodities are collected and distributed and also that totally fulfills a laborsaving system.

### Means for solving problem

The present invention is, in its one aspect, a commodity incoming/outgoing management system for managing an incoming and an outgoing of a commodity, which includes: a first identifier storage device that can be attached to the commodity and can store first information; an information write unit that records the first information to the first identifier storage device; a first information read unit that can read out the first information in the first identifier storage device which is attached to the commodity; and a first information processing device that can receive the first information which is read out by the first information read unit and, based on the received information, process information about the incoming or the outgoing of the commodity to which said first identifier storage device is attached.

Preferably, in such aspect, the present invention further includes a second identifier storage device that can be attached to a case which houses the commodity and can store second information, wherein: the information write unit records the second information to the second identifier storage device; the first information read unit can read out the second information in the second identifier storage device which is attached to the case and the first information in said first identifier storage device which is attached to the commodity; and the first information processing device can receive the first information and the second information which are read out by the first information read unit, based on the received information, process information about the incoming or the outgoing of the commodity to which the first identifier storage device is attached and associate the information about the incoming or the outgoing of the commodity with information about an incoming or an outgoing of the case to which the second identifier storage device is attached.

Preferably, in such aspect, the present invention further includes a third identifier storage device that stores third information which indicates a return of the commodity to which the first identifier storage device is attached, wherein if the first information read unit reads out the third information of the third identifier storage device and the first information of the first identifier storage device, the first information processing device performs a return processing of the commodity to which said first identifier storage device.

Preferably, in such aspect, the first information includes delivery destination information about a delivery destination to which the commodity is to be delivered and commodity information which indicates a type of the commodity.

Preferably, in such aspect, the second information may include delivery destination information about a delivery destination to be delivered to.

Preferably, in such aspect, the first information processing device may have information about a delivery destination to which the commodity is to be delivered and determine whether the delivery destination information of the first information read out by the first information read unit agrees with the delivery destination information of the second information read out by the information read unit or not.

Preferably, in such aspect, the first information processing device may compare one or more pieces of the first information each of which is read out by the first information read unit and has the same delivery destination information as delivery destination information of the second information which is read out by the information read unit to a group of first information comprised of one or more pieces of first information recorded in one or more first identifier storage devices having the same delivery destination information as the delivery destination information of the second information read out by the information read unit to determine whether one or more pieces of commodity information included in the one or more pieces of the first information agree with one or more pieces of commodity information included in the group of first information or not.

Preferably, in such aspect, the first information may include a type and a sales price of the commodity to which the first identifier storage device is attached.

Preferably, in such aspect, the first information may include information about a part which is used in a manufacturing line of a product and to which the first identifier storage device is attached.

Preferably, in such aspect, the first information may include information about a delivery destination to which the commodity is to be delivered with the first identifier storage device attached and information about delivery means which serves for delivering the commodity and the second information may include information about the delivery means.

Preferably, in such aspect, the present invention further includes: a second information processing device that is connected to the first information processing device and can access information about a commodity to be delivered and is disposed at a delivery destination of the commodity; and a second information read unit that can read out the first information stored in the first identifier storage device and the second information stored in the second identifier storage device, wherein the second information processing device cross-checks the first information and the second information both of which are read out by the second information read unit with the information about a commodity to be delivered and sends a result of the cross-checking to the first information processing device.

Preferably, in such aspect, the present invention further includes an account adjusting unit that displays an amount of money and transacts a transfer of money which corresponds to the amount of money, wherein: the first information is information about a price of said commodity; and the first information processing device derives the amount of money required for an account adjustment based on the first information which is read out by the first information read unit.

Preferably, in such aspect, the first identifier storage device may be a noncontact type IC tag having an IC chip unit and an antenna unit.

Preferably, in such aspect, the first identifier storage device may use a radio wave of a 2.45 GHz frequency band in transmission and reception of information.

Preferably, in such aspect, the antenna unit of the first identifier storage device may have directivity in transmission and reception of the radio wave; and the first identifier storage device may be housed in a structure for protecting the first identifier storage device so that, when the structure houses the first identifier storage device, the structure may have equivalent thicknesses of at least 1.5mm from a center of said antenna unit perpendicular to the directivity and may have a thickness of at least 3mm in the direction perpendicular to the directivity.

Preferably, in such aspect, the first information read unit may have a tunnel like structure, an antenna on an inner wall surface of the tunnel like structure, and a portion on which an IC tag may be mounted, wherein: the portion on which the IC tag is mounted can rotate in an approximate horizontal plane and rock to slant from the horizontal plane with the IC tag mounted on; and the first information read unit can read out information stored in the IC tag with the portion rotated and rocked.

Preferably, in such aspect, the present invention further includes a reflector that is disposed on at least a part of the inner wall surface of the tunnel like structure, wherein the reflector can reflect a radio wave.

The present invention is, in its another aspect, a noncontact type IC tag having an IC chip unit and an antenna unit, wherein the antenna unit of the noncontact type IC tag may have directivity in transmission and reception of the radio wave; and the noncontact type IC tag may be housed in a structure for protecting the noncontact type IC tag so that, when the structure houses the noncontact type IC tag, the structure may have equivalent thicknesses of at least 1.5mm from a center of the antenna unit along a direction perpendicular to the directivity and may have a thickness of at least 3mm in the direction perpendicular to the directivity.

The present invention is, in its further aspect, an IC tag reader which includes a tunnel like structure, an antenna on an inner wall surface of the tunnel like structure, and a portion on which an IC tag can be mounted, wherein: the portion on which the IC tag is mounted can rotate in an approximate horizontal plane and rock to slant from the horizontal plane with the IC tag mounted on the portion; and the first information read unit can read out information stored in the IC tag with the portion rotates and rocked .

### Effect of the invention

The commodity incoming/outgoing management system according to the present invention can accurately manage incoming and outgoing commodities, thereby mitigating burdens on persons in charge of incoming and outgoing commodities' management.

### Brief Description of Drawings

Fig. 1 is a block diagram of a repair part management system according to a first embodiment of the present invention.
Fig. 2 is a flowchart of processing from a reception of a repair request to a shipping ordering of repair parts according to the first embodiment.
Fig. 3 is a flowchart of processing from the shipping ordering of repair parts through shipping of the repair parts to collecting and storing of surplus unused repair parts according to the first embodiment.
Fig. 4A is an outlined perspective view of a guiding conveyer and a tunnel-like-structured IC tag reader that are used in the first embodiment.
Fig. 4B is a plan view of the guiding conveyer and the tunnel-like-structured IC tag reader that are used in the first embodiment.
Fig. 4C is an elevation view of the guiding conveyer and the tunnel-like-structured IC tag reader that are used in the first embodiment.
Fig. 5 is an outlined perspective view of a conveyer line and another example of a tunnel-like-structured IC tag reader that are used in the first embodiment.
Fig. 6A is a perspective view of an IC tag protecting structure that contains the IC tag used in the first embodiment.
Fig. 6B is a cross-sectional view taken along the line VIB-VIB of Fig. 6A.
Fig. 6C is an outlined perspective view of the IC tag used in the first embodiment showing directivity of the IC tag for receiving radio waves.
Fig. 7 is a block diagram of a repair part management system according to a second embodiment of the present invention.
Fig. 8 is an outlined perspective view of a part IC tag used in the second embodiment.
Fig. 9 is an outlined perspective view of a configuration of a repair part sorting unit of the second embodiment.
Fig. 10 is an outlined perspective view of a delivery destination IC tag used in the second embodiment.
Fig. 11 is an outlined diagram of an IC tag information read unit in the second embodiment.
Fig. 12 is a diagram illustrating processes for returned-parts of the second embodiment.
Fig. 13 is an outlined diagram of a configuration of the IC tag used in the second embodiment.
Fig. 14 is a perspective view and a bottom view of a configuration of an IC tag protecting structure.
Fig. 15 is a graph of IC tag reading experiments.
Fig. 16 is a block diagram of an accounting system according to a third embodiment of the present invention.
Fig. 17 is a block diagram of a commodity incoming/outgoing management t system according to a fourth embodiment of the present invention.
Fig. 18 is S a block diagram of a completed article verification system according to a fifth embodiment of the present invention.
Fig. 19 is a block diagram of a package delivery management system according to a sixth embodiment of the present invention.

### Explanations of Letters or Numerals

- 30: IC tag reader covering unit
- 31: antenna
- 35: rotating machine
- 36: IC tag reader bottom unit
- 38: shutter
- 39: rotating mechanism rocking machine
- 301, 500: IC tag
- 415a: part IC tag
- 415b: delivery destination IC tag
- 415c: return IC tag
- 407, 701, 805, 851, 907: computer
- 409: IC tag information write unit
- 411: repair part sorting unit
- 413, 703, 855: IC tag information read unit
- 419: container
- 600: IC tag protecting structure
- 705: account adjusting unit
- 711: entrance/exit gate
- 731: product IC tag
- 741: in-store product IC tag
- 807, 930: IC tag reader
- 815a: product IC tag
- 815b: outlet IC tag
- 853: part procuring unit
- 915: package IC tag
- 921: receiver
- 933a, 933b: transmitter

### Modes for Carrying Out the Invention

### <1. First Embodiment>

The following will describe a first embodiment of a commodity incoming/outgoing management system according to the present invention with reference to drawings. The system of the present embodiment is a repair part management system that can be applied to an operation for management of repair parts for an electric home appliance on-site troubleshooting business. This repair part management system may be operated at a repair parts managing warehouse so as to automate nearly all operations for managing repair parts in the parts warehouse including a shipment of repair parts, a returning of surplus repair parts which are not used in repair work to the parts warehouse, and a housing of the unused repair parts to a designated parts shelf.

The repair part management system comprises:
a customer information managing unit to which customer information of a customer who have requested to repair a product, a past visit history to the customer, and a trouble history of the product of interest are input and which stores the input information, cross-checks and selects the pieces of the stored information, and outputs the stored information;
a repair person in charge managing unit to which repair capability information of a repair person in charge is input and which stores the repair capability information and outputs repair person in charge information enrolled at a repair base point that responsibly manages an operation in an area where the customer indicated in the customer information output by the customer information managing unit resides;
a repair person in charge commanding unit which stores and executes a selecting program that selects an optimal repair person in charge by using the repair persons in charge information output by the repair person in charge managing unit, plans a working schedule for the repair person in charge selected by the selecting program, and stores and outputs the working schedule;
a trouble repairing information managing unit which statistically estimates a trouble mode, a trouble frequency, a troubled site, and a troubled part, etc. of a product and an repairing efficacy for the product by a part replacement by using the trouble history output by the customer information managing unit and stores and outputs a result of the estimate;
a repair part selecting unit that selects a repair part required for repairing by using the result of the estimation output by the trouble repairing information managing unit and stores and outputs a result of the repair part selection;
a selected repair part information delivering unit which stores and outputs repair part information included in the result of the repair part selection output by the repair part selecting unit;
a repair part information converting unit which creates, stores, and outputs IC tag information, which is to be stored in an IC tag, with using the repair part information output by the selected repair part information delivering unit, and writes the IC tag information into the IC tag;
a shipment slip outputting unit which outputs the repair part information output by the selected repair part information delivering unit as a repair part shipment slip;
a shipment slip matching checking unit which cross-checks the IC tag information output by the repair part information converting uni t and the repair part shipment slip output by the shipment slip outputting unit, checks match/mismatch between them, and stores and outputs a result of the check on the shipment slip;
a part information matching checking unit which cross-checks the IC tag information written into the IC tag by the repair part information converting unit and information indicated on a repair part or on a package of the repair part, checks match/mismatch between them, stores a result of the repair part indication matching check, and further cross-checks the repair part information output by the selected repair part information delivering unit and the IC tag information, checks match/mismatch between them, and stores and outputs a result of the repair part information matching check;
a sales processing managing unit which compares a container that conveys returned repair parts and the repair part information output by the selected repair part information delivering unit, automatically performs sales processing and returned-parts processing, and outputs sales information; and
a sales record managing unit which calculates a sales record for each of the repair persons in charge based on the sales information output by the sales processing managing unit and the working schedule output by the repair person in charge commanding unit.

The units of the present system can be realized by one or more computers as an information processing device and a printer, an IC tag writer, an IC tag reader, a bar-code reader or two-dimensional-code reader, an automatic traveling palette conveyer, and a sorter which sorts commodities, etc. that are connected to the one or more computers.

The present repair part management system can easily and accurately manage repair parts for an on-site troubleshooting business. The present system thus has an effect that the system can reduce mental and physical loads of personnel involved in those operations, optimize stocks, reduce losses of the stocks, and promote a paperless environment; thereby it contributes to a reduction in costs involved in the troubleshooting business.

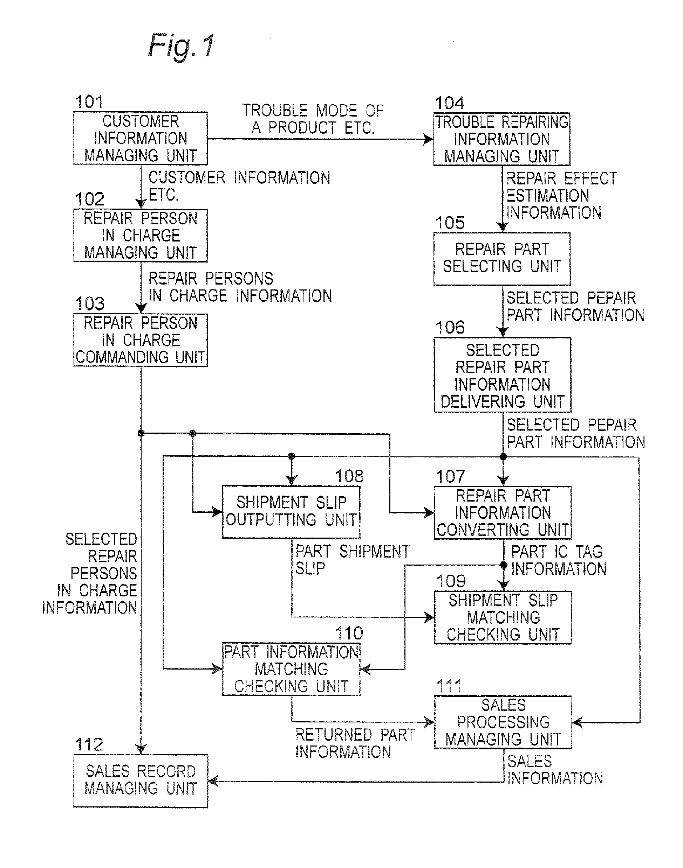

Fig. 1 is a block diagram of the repair part management system according to the first embodiment. Components shown in the figure are realized by a computer equipped with a storage device and a program executed by the computer and a plurality of devices which are connected to the computer as such they can transmit and receive information. Those devices are explained in detail later.

### <1-1. Repair person in charge determining process>

A customer information managing unit 101 accepts an input of customer information of a customer who requests a customer center to repair a product, a past visit history to the customer, and a trouble history of the product of interest, etc., where the customer center is connected to a parts warehouse with communication means or the like.

The customer information managing unit 101 stores those information pieces, cross-checks them with data of past record if necessary, and sends customer information etc. to a repair person in charge managing unit 102.

With using the received customer information etc., the repair person in charge managing unit 102 searches for appropriate repair persons in charge enrolled at a repair base point which takes charge of an area where the customer resides based on their repairing abilities etc., stores a list of the appropriate repair persons in charge as repair persons in charge information, and sends it to a repair person in charge commanding unit 103.

Based on the repair persons in charge information, the repair person in charge commanding unit 103 selects optimal repair persons in charge with using the program running in the computer, plans working schedules for the selected repair persons in charge, stores these schedules as selected repair persons in charge information, and sends them to a shipment slip outputting unit 108 and a sales record managing unit 112.

In the present system, based on a repair request received by the customer center, the customer information managing unit 101, the repair person in charge managing unit 102, and the repair person in charge commanding unit 103 select one or more repair persons in charge, who actually take charge of repair, and incorporate the repair request into the working schedules of the selected repair persons in charge.

### <1-2. Repair parts determining process>

Further, the customer information managing unit 101 sends information concerning a trouble mode, a trouble occurring frequency, a troubled site, a troubled part, etc. of a product related to the repair request, which is received at the customer center from a customer, to a trouble repairing information managing unit 104.

The trouble repairing information managing unit 104 classifies the information pieces according to a type of the product, references past similar instances accumulated so far, estimates statistically a degree of certainty that the trouble will be repaired by replacing one or more parts which are inferred their involvement in the trouble, stores its result as repair effect estimation information, and also sends the information to a repair part selecting unit 105.

Based on the repair effect estimation information, the repair part selecting unit 105 selects one or more repair parts estimated to be necessary for repairing, stores its result as selected repair part information, and also sends the information to a selected repair part information delivering unit 106. The selected repair part information may as well be determined by selecting a predetermined number of repair parts in order of their estimated degree of certainties of being required to complete the repair. The selected repair part information may also be determined by selecting repair parts such that a probability that the troubleshooting can be completed at the current on-site repairing should be more than or equal to a predetermined value. In such a manner, the repair parts are automatically selected by the system.

The selected repair part information is input to a selected repair part information delivering unit 106, which in turn sends the selected repair part information to a repair part information converting unit 107 which records information into an IC tag, a shipment slip outputting unit 108 which outputs information as a shipment slip, and a sales processing managing unit 111 which performs sales processing. The repair part information converting unit 107 functions as an IC tag information write unit.

Next, the present system performs processes for sorting repair parts to be delivered to each of the repair persons in charge and for shipping the parts to each of the repair persons in charge or base points to which at least one of them belongs. These processes are performed by a repair part sorting unit (not shown) automatically or by a cooperation of the system and a small number of sort persons in charge.

The present system records the repair part information and delivery destination information into a wireless and noncontact type IC tag (hereinafter referred to as an "IC tag"), which functions as an identifier storage device, and utilizes the IC tag for management of incomings and outgoings (storage and retrieval) of the repair parts.

The IC tag (IC card) used in the present embodiment is of a noncontact type and uses a 2.45-GHz frequency band radio wave in communication. An IC tag using any other frequency band in communication can be used. Further, the present invention can use a hybrid type or a dual interface type IC tag.

### <1-3. Repair parts shipment process>

The repair part information converting unit 107 has an IC tag writer. Based on the received selected repair part information and selected repair persons in charge information, the repair part information converting unit 107 converts information for identifying a repair part and information about a repair person in charge who receives the repair part into part IC tag information and writes the part IC tag information into each IC tag for each repair parts.

The shipment slip outputting unit 108, which is equipped with an output device like a printer for example, outputs information about a repair part to be shipped and a repair person in charge at its delivery destination as a part shipment slip based on the selected repair part information and the selected repair persons in charge information. This shipment slip outputting unit 108 constitutes a part of the repair part sorting unit.

A shipment slip matching checking unit 109 cross-checks the part IC tag information written in the IC tag by the repair part information converting unit 107 and the information written in the part shipment slip with each other to check match/mismatch between them. A result of this check may be displayed on a display device equipped to the shipment slip matching checking unit 109. This shipment slip matching checking unit 109 constitutes a part of the repair part sorting unit.

A part information matching checking unit 110 cross-checks the part IC tag information in the IC tag written by the repair part information converting unit 107 and information about parts or the number thereof indicated by the selected repair part information to check match/mismatch between them. If it is determined that they match each other, the selected (specified) repair part is shipped on the basis of the part IC tag information. The shipped part is delivered to the selected repair person in charge. Further, the part information matching checking unit 110 functions also as a returned part information creating unit which reads out part IC tag information from the IC tag attached to the part and stores a type and a quantity of the returned unused repair part. In this case, the information about the returned unused repair part may be sent to a sales processing managing unit 111. This part information matching checking unit 110 constitutes an IC tag information read unit for reading out information recorded in the IC tag.

### <1-4. Process for a returned repair part>

Moreover, when a returned unused repair part in a container undergoes a process for inspecting the part and a process for the returned part both of which are performed by the part information matching checking unit 110, the sales processing managing unit 111 compares resultant information to the information obtained from the selected repair part information delivering unit 106 to perform a sales processing and the returned-parts processing and store their results automatically.

A sales record managing unit 112 derives sales records for each of the repair persons in charge on the basis of information obtained from the sales processing managing unit 111 and the repair person in charge commanding unit 103 and stores them. The sales record managing unit 112 can manage an overall sales record of the on-site troubleshooting business and sales records of each of the repair persons in charge.

### <1-5. Process flow>

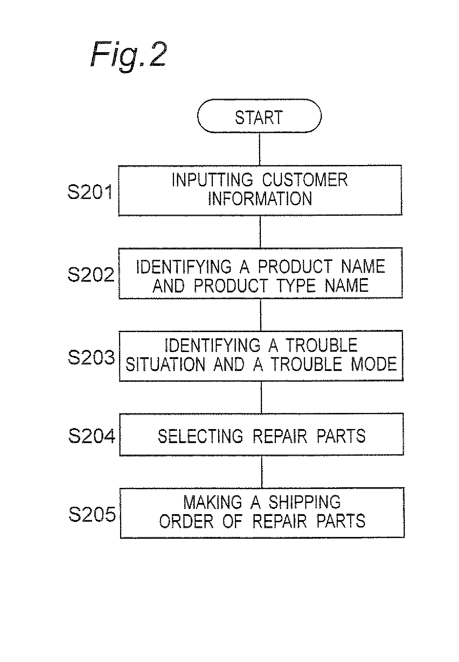

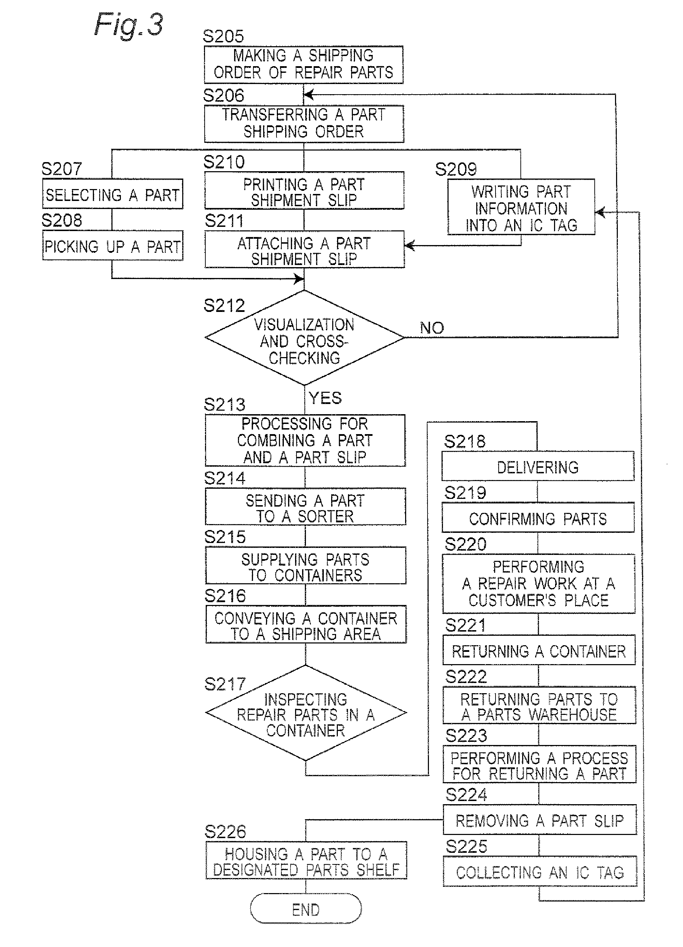

Next, a process flow of the present system is described with reference to Figs. 2 and 3. Figs. 2 and 3 are flowcharts of processing which is performed by the repair part management system according to the first embodiment of the present invention.

Fig. 2 is a flowchart of processing from receiving of a repair request from a customer to making a repair part shipping order.

A person in charge for receiving a repair request hears a customer his or her customer information such as a name, an address, or a phone number of the customer requesting a repair, or, a produce, its type, a situation of a trouble, a symptom, and his or her desirable repair date. The customer information managing unit 101 of the present system accepts an input of these pieces of the customer information.

Based on the customer information, the customer information managing unit 101 can determine a name and a type name of the product to be repaired. If a type name of the product cannot be identified only from the information provided by the customer, for example, if the product (for example, "TV set bought five years ago") itself is known but its name and type name cannot be identified, that is, if the information provided by the customer is imprecise, the present processing system may perform fuzzy search into a database for repair parts selection etc. so as to identify the product name and the type name. In such cases, the present system may be configured such that the person in charge for receiving a repair request may ask the customer a question according to a question displayed on an interactive interface involved in the system and, from the customer's reply, it is possible to get a hint for the type name and finally, based on the hint, to identify the type name (step S202). It is to be noted that the database for repair parts selection may be included in the present system and can summarize information collected from the customers in the past repair request instances and actual trouble contents being related with each other.

Next, the trouble repairing information managing unit 104 of the present system cross-checks a trouble situation of a product, a trouble symptom, a trouble code number displayed on a troubled electric home appliance, a trouble occurring frequency, etc. according to the customer information and the database for repair parts selection with each other to identify a trouble situation and a trouble mode of the product. This identification process may also include an estimation based on statistics. If the present system determines that the customer information alone is not enough to perform the estimation with a high degree of certainty, additional questions may be displayed on the interface of the customer information managing unit 101 to permit the person in charge for receiving a repair request to ask the customer the additional questions and input his or her reply into the system so that the system would perform the estimation process again, thereby improving a precision of identification (step S203).

Next, based on a result of the identification of the trouble situation and the trouble mode at step S203, the repair part selecting unit 105 of the present system selects repair parts required for repair in such a manner as to provide a probability of the repair person in charge to complete the repair in excess of a predetermined value (e.g., 90%) (step S204).

Next, based on the selection of the repair parts at step S204, the selected repair part information delivering unit 106 of the system performs a process for making a shipping order of repair parts to a parts warehouse (step S205). In this step, the system automatically transmits information about the repair parts selected at step S204 (selected repair part information) and repair parts shipping order information about a delivery destination and a delivery date based on the selected repair persons in charge information, which is sent by the repair person in charge commanding unit 103, to the repair part information converting unit 107, the shipment slip outputting unit 108, etc. of the parts warehouse.

Fig. 3 is a flowchart showing a flow of the system's process from transmission of repair parts shipping order information, through parts shipment, to collection and storage of surplus unused repair parts which were not used in repair work.

At step S205 (a process of "making a shipping order of repair parts"), a shipping order of the repair parts, which were selected at step S204 (a process of "selecting repair parts"), is automatically made to the parts warehouse with designating a delivery destination and a delivery date (transmission of repair parts shipping order information).

The selected repair part information delivering unit 106 transfers the selected repair part information to a computer that manages the parts warehouse (step S206). When having received the selected repair part information, based on this information, the computer that manages parts warehouse sends information to the printer for a part slip included in the shipment slip outputting unit 108, the IC tag reader included in the part information matching checking unit 110, the automatic traveling palette conveyer, and the IC tag writer included in the repair part information converting unit 107.

The automatic traveling palette conveyer selects a parts shelf on which the designated parts are housed and automatically travels to fetch the palette of that parts shelf to a takeout port (step S207).

The automatic traveling palette conveyer automatically brings the palette to a person in charge of the parts warehouse (step S208). According to the repair parts shipping order information, the person in charge of the parts warehouse can identify the designated part on the palette by visually recognizing its part name and its part code described on an individual package box or a surface of the part and pick up necessary number of the pieces.

Further, the repair part information converting unit 107 of the system receives the selected repair part information and writes part information (part IC tag information) into IC tags for individual repair parts by using an IC tag writer (step S209).

The printer for printing a part slip included in the shipment slip outputting unit 108 of the system prints the received selected repair part information as a part shipment slip (step S210).

The shipment slip matching checking unit 109 cross-checks the part IC tag information of the IC tag written at step S205 and contents printed on the part shipment slip. If they match, the part shipment slip is attached to the IC tag (step S211). It is to be noted that contents of the IC tag information displayed on a CRT etc. and contents described on the printed part slip may be cross-checked with each other visually by a person in charge of the parts warehouse.

The part information matching checking unit 110 of the present system cross-checks the part information described on the individual package box of the parts or the surface of the parts and the repair part information indicated on the part shipment slip. If they match, the process proceeds to step S213. If they don't match, the process returns to step S206 (step S212). It is to be noted that this cross-checking may be done visually by a person in charge of the parts warehouse.

The corresponding IC tag is attached to each of the parts that have matched in the cross-checking at step S212 (step S213).

The parts to which the 1C tags are thus attached are sent to a sorter arranged in the parts warehouse (step S214).

It is to be noted that the sorter refers to an automatic conveying and sorting machine that has functions to discriminate a delivery destination of the individual parts and automatically sort them to designated ports (to containers etc.) according to the selected repair part information and the selected repair persons in charge information.

The individual parts are classified and sorted by the sorter based on the selected repair part information and the selected repair persons in charge information and supplied to designated containers (step S215).

At a specific time, the containers are sequentially and automatically conveyed to a shipping area by a feeding conveyer (step S216).

An IC tag reader, which is provided on the feeding conveyer and constitutes a part of the part information matching checking unit 110, reads out and inspects repair parts in the container and, substantially simultaneously, the repair parts and the selected repair parts information and selected repair persons in charge information (delivery destination, necessary parts, etc.) are cross-checked each other (step S217).

A result of the cross-checking is used for a sales processing about the delivery destination (repair person in charge) and recorded in the computer in the sales processing managing unit 111.

From the shipping area, the containers are delivered to their delivery destinations by the transport agent (step S218).

Contents of the containers thus delivered are confirmed by the repair persons in charge. In this confirmation, the repair persons in charge cross-check the content with transmitted and received information about repair work expected on the day (step S219).

The repair person in charge visits a customer's place and performs repair work (step S220). In this case, the repair person in charge does not always use all of the prepared repair parts he carried, so that some of them may become surplus.

Upon completion of the repair work, the repair person in charge inputs a completion report into a vehicle-installed terminal, which in turn automatically transmit it to a repair persons in charge operating condition database. A sales record of a repair person in charge can be transmitted to the computer of the system. The sales record can be accumulated and added up as a sales record of the repair person in charge at an end of a term.

Upon completion of operations expected on the day, the repair person in charge returns to the base point (or his own home) to return the container including the surplus parts to a predetermined place (step S221).

A transport agent, who circulates through some places for parts returning, collects the returned container the surplus parts included therein and returns them to the parts warehouse (step S222).

Then, at the parts warehouse, the container including the surplus parts is sent to a returning line, so that an IC tag reader included in the part information matching checking uni t 110 can read out the part information in the container and a returned-parts processing should be performed automatically (step S223).

The surplus parts are taken out from the container. Then each of them is conveyed to each storage place specified on the basis of the part information and each part slip is removed (step S224).

IC tags are removed from the part slips and collected (step S225).

The collected parts are sequentially housed on a parts shelf specified by step S224 (step S226).

### <1-6. Tunnel-like-structured IC tag reader>

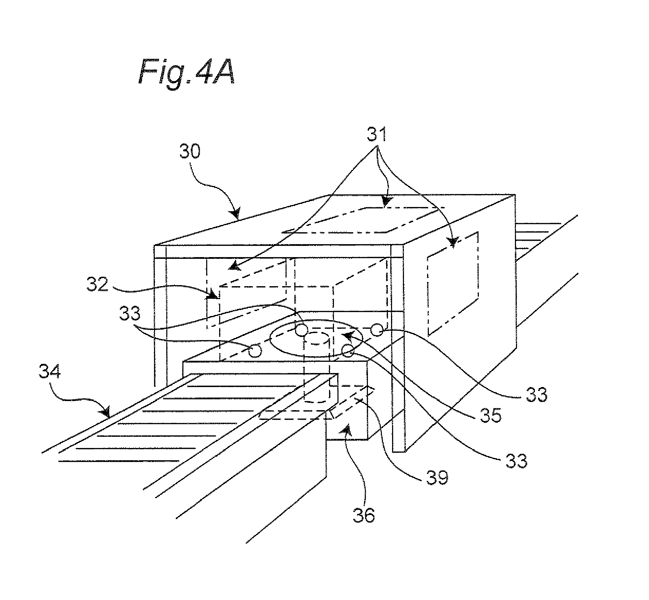

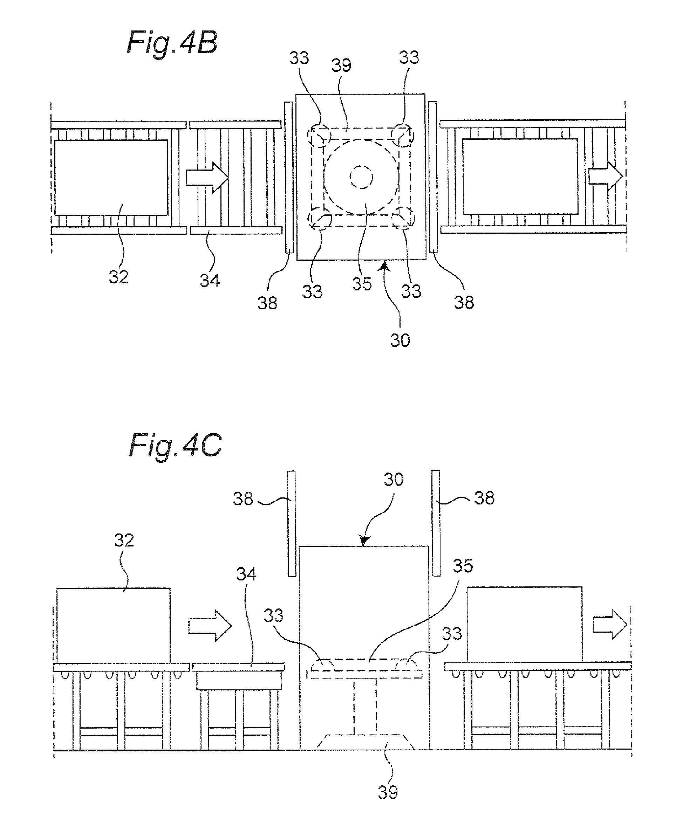

Figs. 4A, 4B, and 4C are a perspective view, a plan view, and an elevation view respectively of the tunnel-like-structured IC tag reader on an IC tag information reading station, which is used in a process for reading information of the IC tags attached to the individual parts in order to check whether a large number of repair parts being sorted for each repair person in charge are included in a container in accordance with requested part information (step S217 in Fig. 2) or not. Intra-tunnel space is ensured that a container 32 may pass through an inside of a tunnel-like-structured IC tag reader covering unit 30 arranged on a conveyer line 34 and over a top surface of an IC tag reader bottom unit 36. The IC tag reader covering unit 30 has a tunnel like structure formed by side plates and a top plate so that the container 32 can pass therethrough, and the IC tag reader covering unit 30 has one or more antennae 31. The IC tag reader bottom unit 36 is arranged in such a manner that the unit 36 is at least partially covered by the IC tag reader covering unit 30 and the unit 36 has a mechanism 33 that can send the container 32 forward and backward or a rotating machine 35 that can rotate the container 32 in a horizontal plane and a rotating mechanism rocking machine 39 that can hold the container 32 slanted with respect to the horizontal plane. The mechanism 33 may be, for example, a spherical conveyer roller. The IC tag reader bottom unit 36 may have the same antenna (not shown) as an antenna 31. The IC tag reader covering unit 30 and the IC tag reader bottom unit 36 constitute the IC tag reader of the present invention, which can move, rotate, and rock the container 32. The container 32 can be fed through the space between the IC tag reader covering unit 30 and IC tag reader bottom unit 36, and, furthermore, be rotated and fed forward and backward by the rotating machine 35 and the rotating mechanism rocking machine 39 in a condition that the container 32 is slanted with respect to the horizontal plane. It is to be noted that the IC tag reader covering unit 30 is provided with one or more antenna 31 to radiate radio waves almost everywhere inside the tunnel-like-structure. Furthermore, a reflector is provided on an inner wall surface of the tunnel like structure to reflect the radio waves at various angles.

The container 32 includes a plurality of IC tags which are attached to repair parts. Generally, those IC tags and repair parts to which the IC tags are attached are conveyed in a condition where they are packaged into a container 32 in a disorderly manner. In addition, some of the repair parts may be made of such a material (e.g., metal) as to reflect radio waves, thus making it difficult for the radio waves to reach the IC tags. To completely read out the part IC tag information of the IC tags included in the container 32 in such a disorderly condition, the IC tag reader covering unit 30 of the system has a tunnel like structure (arch-shape, inver-ced-U-shape). On the inner wall of the tunnel like structure, a plurality of antenna 31 of the IC tag reader is provided to reduce the number of regions where no radio wave reaches (dead points) inside the tunnel like structure. Further, the inner wall surfaces of the tunnel like structure and the IC tag reader bottom unit 36 function as reflectors that reflect radio waves at random.

Nevertheless, in some cases, an IC tag being closely contact with a repair part cannot receive a radio wave. Therefore, the rotating machine 35 is configured to rotate in the horizontal plane at a predetermined cycle so that the IC tag reader can communicate with the IC tag while the container 32 is rotated.

Furthermore, the rotating mechanism rocking machine 39, which supports the rotating machine 35, has a function to slant the rotating container 32 and rotating machine 35 with respect to the horizontal direction. Therefore, the container 32 rotates in an approximately horizontal plane with being rocked. Preferably a rocking cycle and a rotating cycle are controlled to be asynchronous to each other, that is, they are controlled in such a manner that a phase of the rocking induced by the rotating mechanism rocking machine 39 may not be horizontal when the container is rotated one or more half cycles in the horizontal plane. By reducing amplitude of the rocking and shortening a cycle of the rocking, vibrations propagate through commodities in the container 32 and then the arrangement of the commodities may be subtly changed so that the condition for receiving the radio waves can be improved.

By thus providing the rotating mechanism and the rocking mechanism, it is possible to eliminate a stationary state of the IC tags at the dead point in the tunnel like structure. Further, even the IC tag being closely contact with material that reflects or absorbs radio waves (e.g., metal or liquid such as water) can receive radio waves. It is to be noted that the same effects can be obtained when a rotating mechanism elevating machine that vertically reciprocates the rotating machine 35 are provided instead of the rotating mechanism rocking machine 39.

As shown in Figs. 4B and 4C, opening-and-closing shutters 38 are provided at gates of the tunnel like structure. It is to be noted that to keep clearness of the figure, the opening-and-closing shutter 38 is not shown in Fig. 4A. An inner wall surface of the opening-and-closing shutter 38 functions as a radio wave reflector so that leakage of radio waves to an outside of the IC tag reader can be eliminated. It is thus possible to improve performance of the IC tag to receive radio waves and eliminate adverse effects of the radio waves radiated from the IC tag reader to the surrounding environment. To this end, preferably the IC tag reader covering unit 30 and the IC tag reader bottom unit 36 have such a structure that the side plates of the IC tag reader covering unit 30 and the IC tag reader bottom unit 36 may be close to each other to shut out the radio waves.

This configuration greatly improves a probability of reading the IC tag information and extremely reduces failures in reading the IC tag information. Further, since the antenna 31 can be fixed, so that internal wirings etc. of the internal configuration of the IC tag reader can be easily configured. Furthermore, since the plurality of antenna 31 is arranged, a reading speed of the IC tag reader is improved.

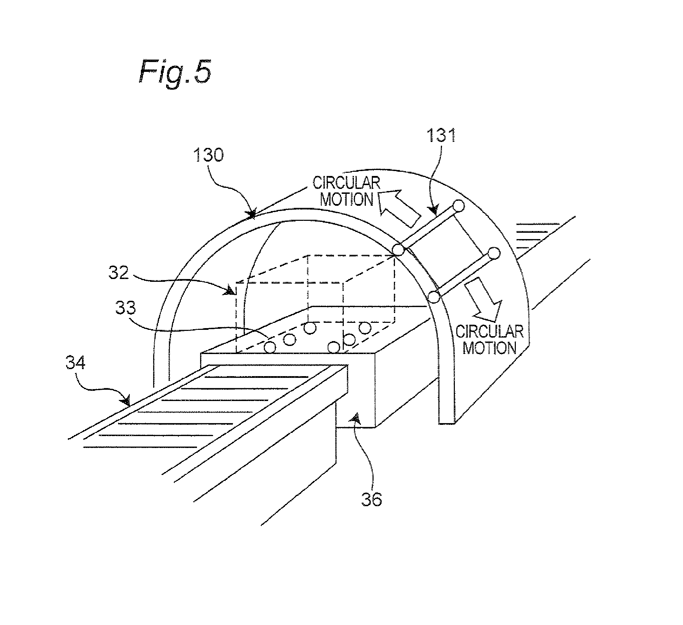

Fig. 5 is a perspective view of another example of the tunnel like structured IC tag reader. It has such a configuration that, at a process for reading out information from the IC tags which are attached to each of many repair parts being sorted for repair persons in charge in order to check whether these repair parts be housed in the container 32 in accordance with established part information, the container 32 may stop in or pass through an IC tag reader covering unit 130 which is arranged on the conveyer line 34. Furthermore, an antenna 131 of the IC tag reader covering unit 130 can circle around an approximate central part of the container 32, which is inserted and stationed in the tunnel like structure. The IC tag reader bottom unit 36 may have same function as that of the example shown in Fig. 4. Alternately the rotating machine 35 and the rotating mechanism rocking machine 39 may be omitted.

This configuration greatly improves a probability of reading the 1C tag information and extremely reduces failures in reading the IC tag information. Since the IC tag reader of the present example reads out the information without moving the container, the information can be read safely even in a case where a commodity which is extremely fragile to shock is included in the container.

### <1-7. IC tag>

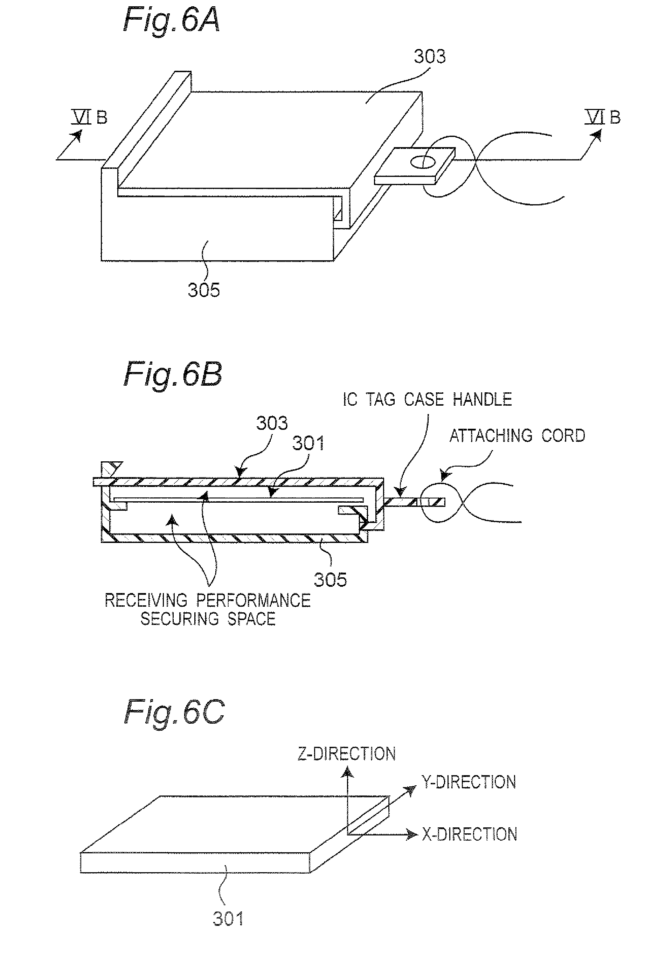

Figs. 6A and 6B show one example of an 1C tag protecting structure for securing an appropriate space around an IC tag which is attached to respective parts at a process for reading out the information in the IC tag. Fig. 6A is a perspective view of the IC tag and the IC tag protecting structure and Fig. 6B is a cross-sectional view taken along the line VIB-VI8 of Fig. 6A.

Placing an IC tag 301 so as to be protected and wrapped up by an upper case 303 and a lower case 305, a receiving performance securing space is given between the IC tag 301 and the repair part to which the IC tag 301 is attached. This IC tag protecting structure needs only to be made of a material having properties that do not shut out radio waves.

The IC tags, which are classified into several categories by frequency bands used, are generally known to be incapable of or instable in its transmission and reception in a case where they come in close contact with metal or a liquid in a case.

Therefore, by providing a space for securing its transmission-and-reception performance around an IC tag in Z-direction of the IC tag 301 in Fig. 6C, information in the IC tag can be read accurately even in a case where many repair parts are mixed in close contact with the IC tag in the container. Radio waves radiated from the antenna unit of the IC tag reader propagate through this space to reach the IC tag. It is to be noted that the X-direction and the Y-direction indicate a direction in which the radio waves receiving performance of the antenna unit of the IC tag becomes high and the Z-direction is perpendicular to these X- and Y-directions.

### <1-8. Summary>

As described above, the repair part management system according to the present embodiment can accurately select a part necessary for a repair work and ship the part without delay and, after the repair work, can return an unused part to a warehouse and house it at a predetermined storage place without delay. Further, it is possible to avoid occurrence of various mistakes such as a misdelivery and missing parts all through the process and further automate stock management conventionally performed by cross-checking between a actual part and a slip and sales managements for each repair persons in charge such as, which has conventionally been performed manually, which have conventionally been performed manually.

Also, an on-the-way period of a part (a period from its shipment to its re-storing), that is, a lag time in an account of stock of the part can be reduced so that stocked parts could be utilized effectively thereby reducing an amount of the stocked parts.

Furthermore, a reduction in number of operations that depend on perception of an operator decreases mental and physical burdens on the operator. By eliminating an operation performed with using a slip, paper-less operation is realized, which contributes to energy saving and environment protection combined with an effect of a reduction of various mistakes and losses in operations.

### <2. Second Embodiment>

Below, a commodity incoming/outgoing management system according to the second embodiment will be described. Like the description of the first embodiment, the present system is also illustrated, with reference to drawings, as a repair parts management system utilized in a repair parts warehouse serving an on-site troubleshooting business for electric home appliances etc.

### <2-1. System configuration>

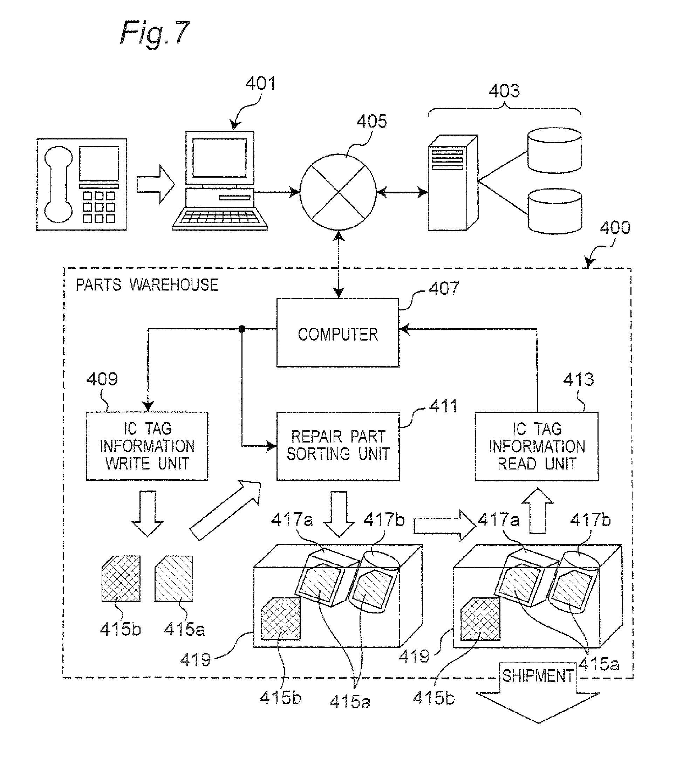

Fig. 7 is a schematic diagram of a flow of information and commodities among a repair part management system for a repair parts warehouse according to the present embodiment and other departments.

A repair part management system 400 of the present embodiment includes:
an IC tag information write unit 409 that writes information into an IC tag and prints information on a surface of the IC tag;
a repair part sorting unit 411 that pairs (attaches) the IC tag into which the information has been written and (to) a repair part and sorts the repair part for its delivery destination;
an IC tag information read unit 413 that reads the information etc. written in the IC tag attached to the repair part being shipped from the warehouse; and
a computer 407 connected with these units.
The computer 407 is connected with a computer 401 at a customer center and a central computer 403 which can orchestrate pieces of information related to the troubleshooting business via a network 405.

### <2-2. Operations of system>

A repair request from a customer is received by the customer center over the phone etc. In the customer center, as in the case of the first embodiment, customer information is input to the computer 401 which constitutes a customer information managing unit. The computer 401 is connected to the central computer 403 and the computer 407 of the repair part management system 400 via the network 405, so that the customer information is sent via the network 405 to the central computer 403 and the computer 407.

The central computer 403 possesses a large amount of information relating to past repair records and customers and constitutes the repair person in charge managing unit, the repair person in charge commanding unit, the sales record managing unit, the trouble repairing information managing unit, the repair part selecting unit, and the selected repair part information delivering unit in the first embodiment. The central computer 403 determines a repair person in charge based on the received customer information, plans a schedule for him or her, and transmits this information as selected repair persons in charge information to the computer 407 via the network 405. Further, the central computer 403 can select a part considered to be necessary for repair based on the customer information and transmits this information as selected repair part information to the computer 407 via the network 405.

When having received the selected repair persons in charge information and the selected repair part information, the computer 407 in the repair parts management system 400 recognizes types and quantities of repair parts to be delivered to each of the repair persons in charge and a date on which they are to be delivered, etc.

These selected repair persons in charge information and selected repair part information are sent from the computer 407 to the IC tag information write unit 409 and the repair part sorting unit 411. The IC tag information write unit 409 has a function to write information into an IC tag and is comprised of, for example, an IC tag writer and a computer which controls the IC tag writer. The repair part sorting unit 411 has a function to read out the information written in the IC tag and a function to read a bar code or a two-dimensional code given on a repair part or a package thereof, and is comprised of, for example, an IC tag reader and a barcode reader or a two-dimensional-code reader and a computer which controls these. The repair part sorting unit 411 is arranged in the vicinity of a parts shelf on which repair parts are stored. The repair part sorting unit 411 may further comprises an automatic traveling palette conveyer which conveys a palette on which repair parts are housed, a sorter which sorts repair parts automatically, and a computer which can control these.

### <2-2-1. Operations of IC tag information write unit>

Based on the received selected repair part information, the IC tag information write unit 409 creates a part IC tag 415a for each of repair parts. Information to be written into the part IC tag 415a is detailed later. Further, the IC tag information write unit 409 creates a delivery destination IC tag 415b based on selected repair persons in charge information. Information to be written into the delivery destination IC tag 415b is also detailed later. It is to be noted that a delivery destination IC tag 415b which is previously used and returned from its previous delivery destination may be reused. The part IC tag 415a and the delivery destination IC tag 415b constitute a first identifier storage device and a second identifier storage device, respectively.

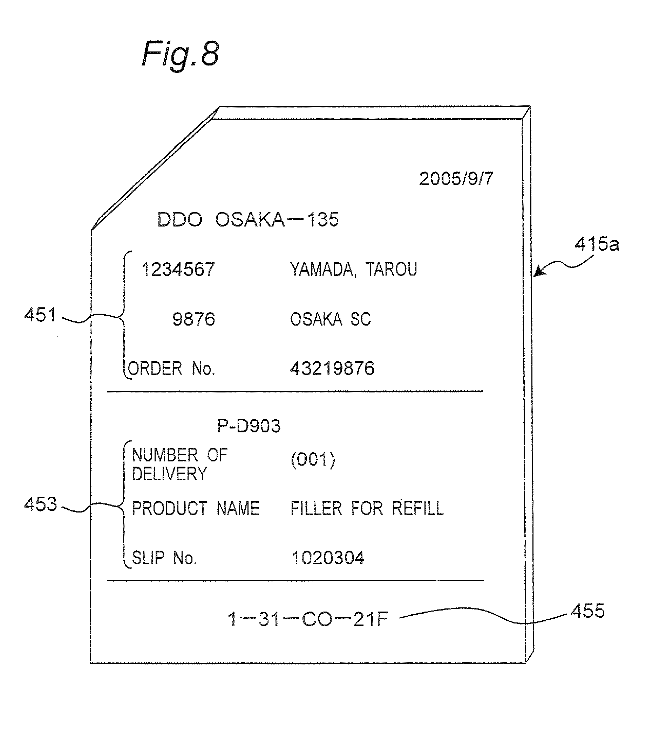

Fig. 8 is a perspective view of the part IC tag 415a. The part IC tag 415a comprises a rewritable layer on its surface, so that information may be written into an IC chip and also information may be printed on the rewritable layer by the IC tag information write unit 409. The printed information includes a delivery destination information section 451 being a destination to which a repair part is to be delivered, a repair part information section 453 being information relating to the repair part, a location number 455 indicative of a parts shelf in which the repair part is housed, etc. Further, delivery destination information and repair part information may be written into the IC chip included in the part IC tag 415a in addition to tag identification information (ID). Alternatively, the IC chip in the part IC tag 415a may have only the tag identification information (ID) so that correspondence between the tag identification information and the delivery destination and repair part information may be stored in the computer 407.

The part IC tag 415a and the delivery destination IC tag 415b are sent to the repair part sorting unit 411.

### <2-2-2. Operations of repair part sorting unit>

Further, in the repair part sorting unit 411, based on selected repair part information and selected repair persons in charge information sent from the computer 407, the automatic traveling palette conveyer delivers a palette housing necessary repair parts from a parts shelf to a sort person in charge first.

The sort person in charge visually recognizes the repair part information printed on the received part IC tag 415a, picks up a repair part, which is indicated in that repair part information, from the palette conveyed by the automatic traveling palette conveyer, and attaches the part IC tag 415a to the repair part. If the repair parts management system 400 has no automatic traveling palette conveyer, the sort person in charge might as well pick up the repair part from the parts shelf based on the location number 455 and attach the part IC tag 415a to the repair part. Further, the sort person in charge attaches the delivery destination IC tag 415b to a container 419 and sets the container 419 accompanied by the delivery destination IC tag 415b to a lower end of a predetermined slope of a sorter 431. The sorter 431 will be detailed later.

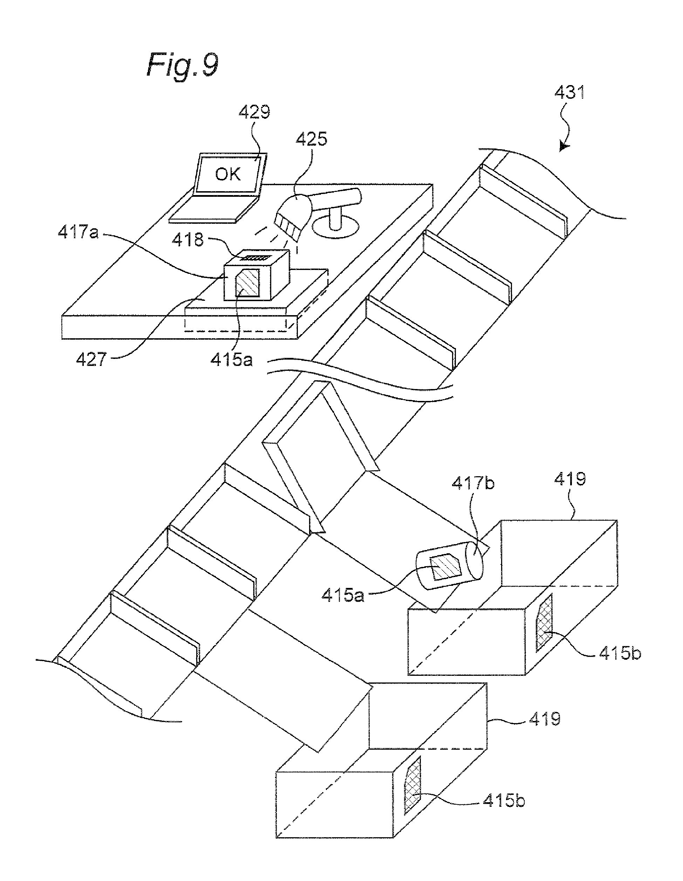

The repair parts to which the part IC tags 415a are attached are automatically sorted for each delivery destinations and packaged in the containers 419 prepared for each of the delivery destinations (e.g., for each repair persons in charge). Fig. 9 illustrates an example of a sorting process performed by the repair part sorting unit 411.

The repair part 417a to which the part IC tag 415a is attached is cross-checked with information recorded in the part IC tag 415a and information of a bar code 418 printed on an individual packaging of the repair part 417a, these information are read by the IC tag reader 427 and the bar-code reader 425 thereat. This cross-checking is performed by the computer 407 connected to the bar-code reader 425 and IC tag reader 427. If the part or the package of the part is also equipped with a part identification IC tag comprised of an IC chip and an antenna unit in place of a bar code or a two-dimensional code, a bar code reader 425 is unnecessary, so that the IC tag reader 427 can read information of the part IC tag 415a and that of the part identification IC tag for cross-checking.

If the repair part information of the part IC tag 415a matches the information in the bar code 418, an "OK" sign etc. appears on a display unit 429. If "OK" appears, the part is mounted on a tray of a sorter 431. The tray of the sorter 431 is equipped with a sensor, so that the tray mounted thereon with the part, which is cross-checked previously, can be recognized.

On the downstream side of the sorter 431, a number of slopes are provided, at the lower end of each of the slopes the containers 419 are arranged to which the delivery destination IC tags 415b are attached.

Correspondence between each of the slope and the delivery destination IC tag 415b which is attached to a container 419 arranged at a lower end of a certain slope is predefined, so that the sorter 431 which is controlled by the computer 407 may slant a tray to drop the repair part (e.g., 417b) into the container 419 to which the delivery destination IC tag 415b corresponding to the delivery destination information is attached, when the tray on which the repair part is mounted passes by that slope where the container 419 is arranged.

In such a manner, the repair parts to which corresponding part IC tags 415a are attached are packed into different containers 419 for each delivery destination.

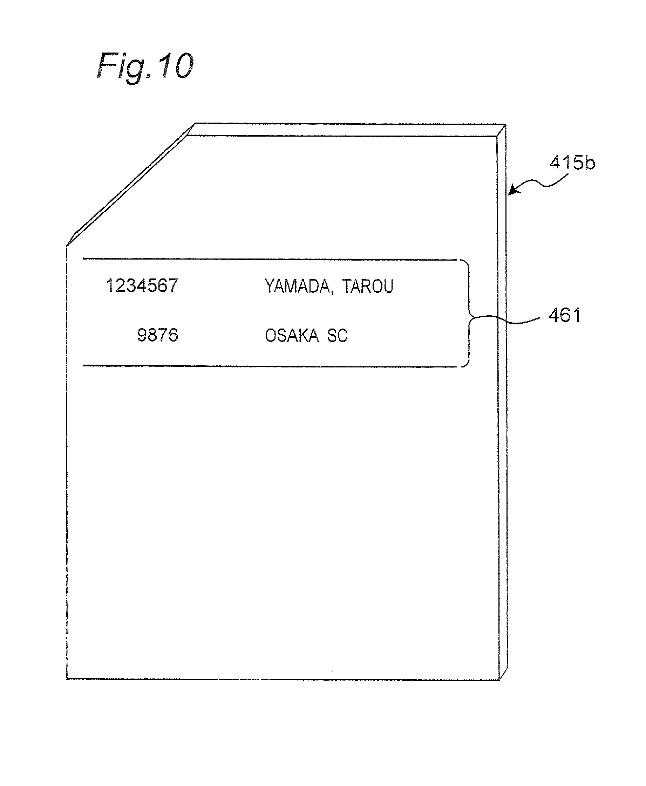

Fig. 10 is a perspective view of the delivery destination IC tag 415b. The delivery destination IC tag 415b has a printable surface and, on this printable surface, delivery destination information 461 such as a repair person in charge to whom the repair part is to be delivered is printed so that visual recognition of this information should be achieved. An IC chip of the delivery destination IC tag 415b stores delivery destination information. The delivery destination IC tag 415b is utilized being attached to the container 419. The IC tag reader may read, according to the delivery destination IC tag, that the container should be delivered to which repair person in charge etc. It is also possible to know a delivery destination by visual recognition based on the printed delivery destination information.

### <2-2-3. Operations of IC tag information read unit>

Referring to Fig. 7 again, the container 419 in which the repair parts 417a, 417b, etc, are packaged is sent to the IC tag information read unit 413. This IC tag information read unit 413 has a function to substantially simultaneously read the part IC tags 415a attached to repair parts to be shipped and the delivery destination IC tag 415b attached to the container 419 to confirm a shipment of the repair parts and is constituted of, for example, an IC tag reader and a computer which controls the IC tag reader. The read Information is sent to the computer 407, which in turn confirms types and quantities of the repair parts included in each of the container, and then the repair parts are shipped from the warehouse. The IC tag information read unit 413 has another function to read the part IC tags 415a attached to returned unused repair parts and the delivery destination IC tag 415b attached to the container 419 in which the returned unused repair parts are packaged to confirm their storing (returning) and storing-on-a-shelf of those returned unused repair parts. This returned-parts processing is detailed later.

The IC tag information read unit 413 may have the tunnel-like-structured IC tag readers 30 and 36 shown in Fig. 4A. Further, the unit 413 may comprise the tunnel-like-structured IC tag readers 131 and 36 shown in Fig. 5 instead.

When the container 419 are sent to the tunnel-like-structured IC tag readers 30 and 36, the delivery destination IC tag 415b attached to the container 419 and information of the part IC tags 415a attached to each of the repair parts are read by the tunnel-like-structured IC tag readers 30 and 36 and sent to the computer 407. The computer 407 cross-checks the received information and the stored selected repair persons in charge information and selected repair part information to confirm that the container 419 properly contains contents without excess or deficiency. If the contents are not correct, the computer tells a sort person in charge the error by using a speaker, a display device, etc.

The container 419 confirmed to include the repair parts correctly is shipped and sent to its delivery destination.

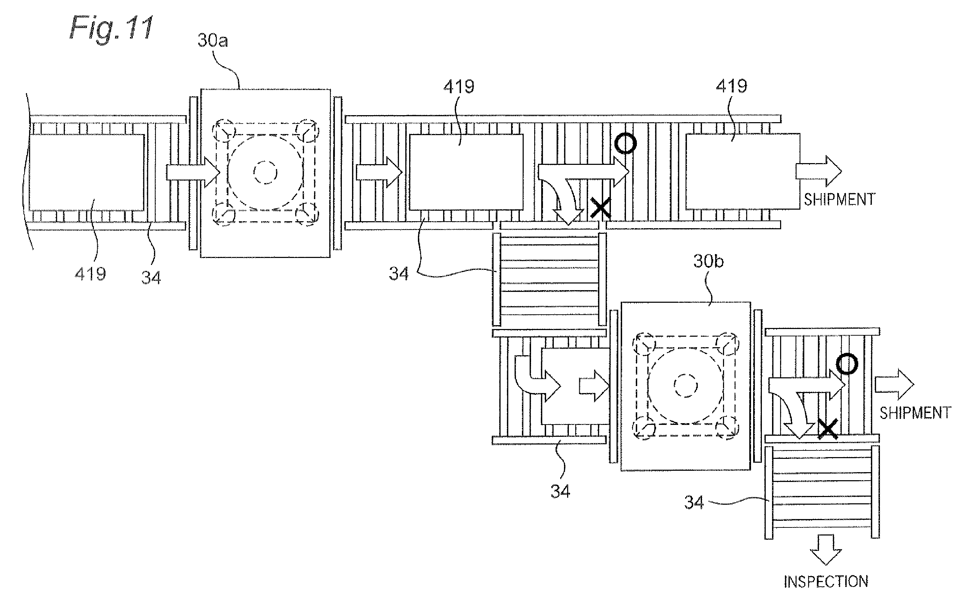

Due to their structural characteristics, the tunnel-like-structured IC tag readers 30 and 36 can well read information of the part IC tags 415a packaged into the container 419 at random. Therefore, the IC tag information read unit 413 can only include a single pair of the tunnel-like-structured IC tag readers 30 and 36. Nevertheless, a possibility of a read error is not zero. Therefore, a plurality of the pair of tunnel-like-structured IC tag readers 30 and 36 may be arranged along a conveyance path of containers to eliminate the read errors. Fig. 11 illustrates an example of the IC tag information read unit 413 having the pluralities of pairs of the tunnel-like-structured IC tag readers 30 and 36.

First, the container 419 passes through a first IC tag reader 30a (and its IC tag reader bottom unit, the same as below), then information of the part IC tag 415a and the delivery destination IC tag 415b is read out. If the computer 407 decides that the repair parts are properly packaged in the container 419, the container is guided rightward and shipped.

In this case, as explained with the first embodiment, the first IC tag reader 30a performs the rotating and rocking movements, and the amount of the rotating movement may be 360 degrees (one rotation) of the container 419 as to the horizontal plane. This is based on an experimental fact that the information of almost all of the IC tags can actually be read completely out through one rotation. Further, both of the IC tags 415a and 415b may have a function to stop transmissions of information for a predetermined lapse of time after their information is read out (so-called mute function), but, in this case, preferably the mute functions should not be activated in the reading by the first IC tag reader 30a or the mute function should be released altogether in all IC tags when they exit the first IC tag reader 30a. This is why the IC tags 415a and 415b are should be able to transmit their information at a second IC tag reader 30b when it is decided that the content of the container 419 be improper by the first IC tag reader 30a and hence the container 419 is entered into the second reader 30b.

The container 419 decided to be improper at the information reading by the first IC tag reader 30a is guided downward in the figure and entered to the second IC tag reader 30b (and its IC tag reader bottom unit 36, the same as below).

The first IC tag reader 30a decides the container 419 to be improper if its contents are actually excessive or deficient or if the first IC tag reader 30a has failed to read out information of all of the IC tags. At the second IC tag reader 30b, it is preferable that an angle of rotation of the rotating machine 35 is set to 720 degrees rotation of the container 419 (two rotations) so that the second reader 30b should read the IC tag information more precisely.

Preferably the cycle of the rotating machine 35 is not synchronous with the rocking cycle of the rotating mechanism rocking machine 39 so that radio waves can reach everywhere in the container 419 through two rotations of the rotating machine 35.

In case where the same IC tag is read out more than once during the two rotations, preferably the mute function, if provided to the IC tags 415a and 415b, may be utilized to prevent the same IC tag being read twice.

If it is decided that the container 419 should be improper also in the information reading process by the second IC tag reader 30b, that container is sent to an inspection by a sort person in charge.

Further, the first and second IC tag readers 30a and 30b each are preferably equipped with a weight-meter at the rotating machine 35 or the rotating mechanism rocking machine 39, the weight-meter being connected to the computer 407. In this case, the computer 407 can store beforehand weights of the various types of repair parts, the IC tags, and the container 419 to compare a total weight of the container 419 and its contents measured by the weight-meter and a calculated predictive total weight of the container 419 and its contents derived from the selected repair persons in charge information and the selected repair part information, thereby deciding whether the contents are properly packaged or not.

By thus configuring the shipping process, it is possible to greatly reduce loads on the persons in charge of the shipping process and decrease the number of them. It is also possible to eliminate slips and the like, thereby promoting paperless work. It is further possible to eliminate a mistake that may occur in manual sorting, thereby preventing misdeliveries of parts.

### <2-3. Operation of the system on a process for returning an unused repair part>

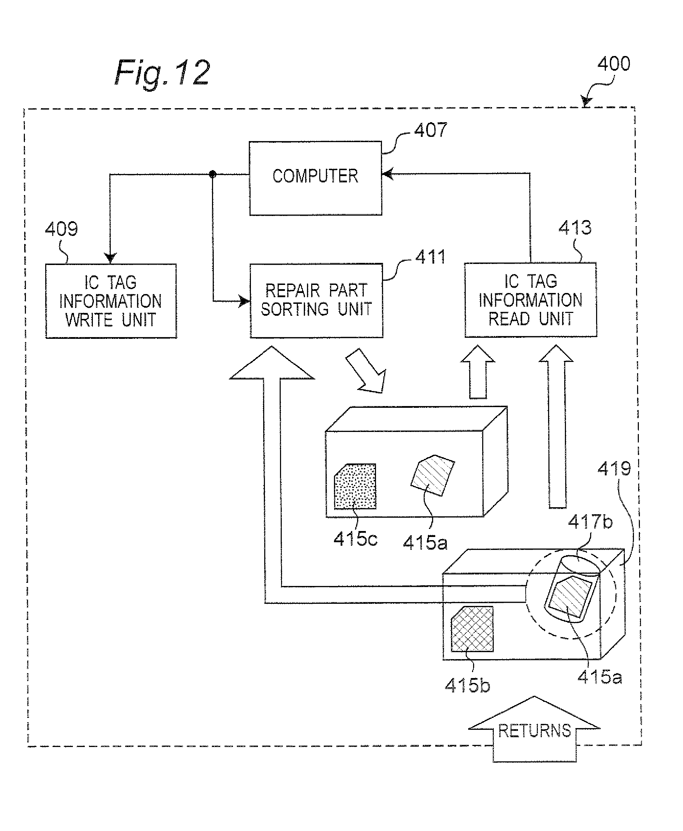

Next, returned-parts processing for an unused repair part is described. Fig. 12 shows an example of returned-parts processing on a returned unused repair part.

The container 419 is sent by a transport agent etc. to a repair person in charge, who in turn performs repair services using repair parts packaged in the container 419. An unused repair part, which is not used in those repair services (e.g. 417b), is housed in the container 419 to which the delivery destination IC tag 415b is attached. The part IC tag 415a is still attached to the unused repair part and the unused repair part is returned to the parts warehouse not by way of the area base point by a transport agent etc. It is unnecessary to perform the returned-parts processing of an unused repair part at the area base point.

The returned container 419 is sent to the IC tag information read unit 413, which in turn substantially simultaneously reads out information of the delivery destination IC tag 415b and information of the part IC tag 415a as in the case of the shipping process. In the returned-parts processing, the information of the delivery destination IC tag 415b is utilized as information of an origin of the return and the information of the part IC tag 415a having read simultaneously is processed by the computer 407 as information of the returned unused repair part 417b.

From the time when the information reading process described at the last paragraph is performed, the computer 407 deals with the unused repair part 417b as stored in the parts warehouse. The unused repair part 417b actually exists in the parts warehouse but has not been returned onto a parts shelf yet and, therefore, is not ready for reuse. (At this point in time, the unused repair part 417b is in a stocked-for-shipping-state.)

Next, the unused repair part 417b with the part IC tag 415a still attached is sent to the repair part sorting unit 411, then the part is housed onto the parts shelf by the sort person in charge. When having been housed on a predetermined parts shelf, the unused repair part 417b is in an actually stocked state where the part can be reused. The sort person in charge removes the part IC tag 415a from the unused repair part 417b housed on the parts shelf and returns only the part IC tag 415a to the IC tag information read unit 413. It is to be noted that details of actual processing from the storage of the returned part to the housing of the unused repair part might as well be performed in reverse order of the shipping process.

A person in charge at the IC tag information read unit 413 collects the part IC tag 415a which is returned to the IC tag information read unit 413 into a container to which a return IC tag 415c is attached. In an IC chip of the return IC tag 415c, a predetermined code may be recorded. By passing this return IC tag 415c through the IC tag readers 30 and 36 together with the part IC tag 415a attached to the repair parts of which state have shifted from the stocked-for-shipping-state to the actually-stocked state and then by reading them substantially simultaneously, the computer 407 is notified that the repair part indicated by the repair part information of that part IC tag 415a have entered a state where they can be managed as an actual stock. Information recorded in the IC chip of the return IC tag 415c only has to be predetermined information which may not be mixed with any other information. The return IC tag 415c constitutes a third identifier storage device.

The repair part indicated by the part IC tag 415a which was read simultaneously together with the return IC tag 415c are subsequently managed as a part in an actually-stocked-state by the computer 407. The repair part in the actually-stocked state refer to a part housed on a parts shelf and can be fetched easily.

Then, the part IC tag 415a may be processed for reuse. In this case, information contained in an internal IC chip of the tag should preferably be erased together with contents printed on the rewritable layer on the surface.

### <2-4. IC tag>

Next, an example of an IC tag well suited for use in the present system is described in detail with reference to drawings. As in the case of the first embodiment, also in the present embodiment, an IC tag is a noncontact type IC tag (card) (RFID). An IC tag of the present embodiment uses a frequency band of 2.45GHz for communication. A 2.45GHz-frequency band radio wave has a high rectilinearity and so is liable to have a shadow of a shield (e.g., a metal material which reflects radio waves, a liquid which absorbs radio waves, etc.) where transmission and reception of information between the IC tag and the reader may become difficult. Therefore, in the present invention, the IC tag readers are provided with such configuration as described above and, further, the IC tags are also devised to receive radio waves at a high probability.

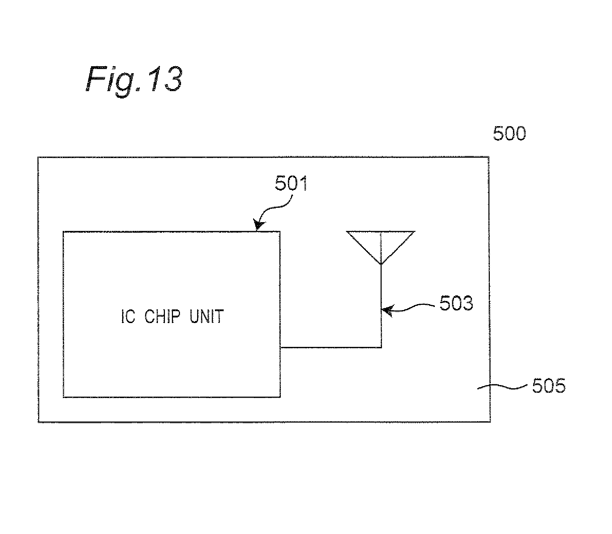

Fig. 13 is a schematic diagram of a configuration of the IC tag. An IC tag 500 has an IC chip unit 501 which stores information and transmits information upon reception of a radio wave and an antenna unit 503 for transmitting and receiving a radio wave. These IC chip unit 501 and antenna unit 503 are sealed by a substrate 505. The substrate 505 has a thickness of about 1 millimeter. However, if the IC tag 500 with the thickness of 1 millimeter is attached to a repair part and placed in a container, the IC tag 500 may be feared to come in close contact with the repair part and, further, to be packaged in a condition where the tag is in close contact with another repair part by the opposite principal surface of the tag. When the IC tag 500 is in close contact with a material that blocks off radio waves at both sides along the direction (Z-direction in Fig. 6C) which is perpendicular to the principal surface of the tag, the IC tag 500 cannot easily receive radio waves.

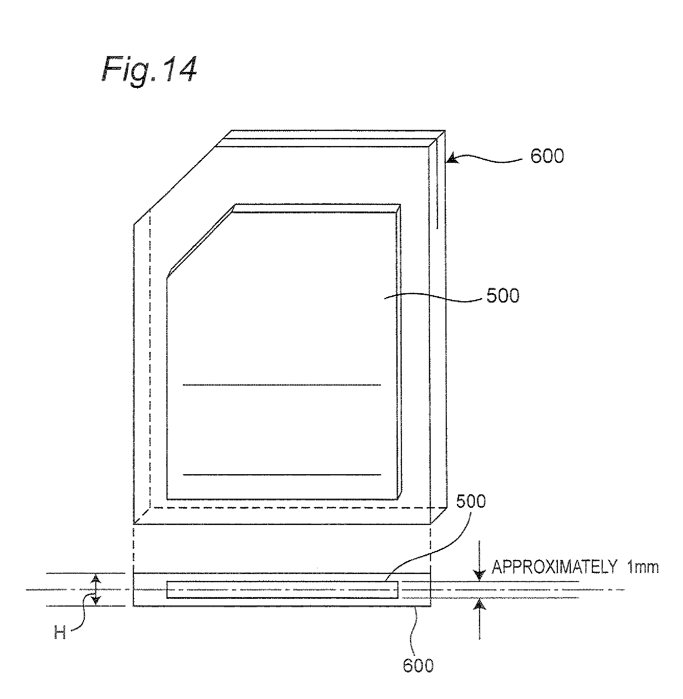

To solve such problem, in the present invention, to prevent the IC tag 500, which is an identifier storage device, from coming in close contact with a radio wave blocking material along the Z-direction, an IC tag protecting structure 600 as shown in Fig. 14 is used. The IC tag 500 is placed in the IC tag protecting structure 600. The IC tag protecting structure 600 also has a function to protect the IC tag 500 from shocks, so that even if the IC tags 500 are packaged in a container in a disorderly manner or even when it is on distribution process, this structure protects the IC tags 500 by absorbing an impulsive force affected on the tag. The IC tag protecting structure 600 is configured to have a thickness of H millimeters in a condition where the IC tag 500 is placed in it. The thickness of H millimeters is preferably at least 2.6 millimeters. More preferably, the thickness H is at least 3.0 millimeters. Even more preferably, it is at least 5.0 millimeters.

Further, preferably the IC tag protecting structure 600 may be made of a material having characteristic that does not block off radio waves, for example, soft (nonrigid) plastic. Furthermore, preferably the IC tag protecting structure 600 is made of a transparent or semi-transparent material in order to secure visibility of information printed on the rewritable layer of the IC tag 500.

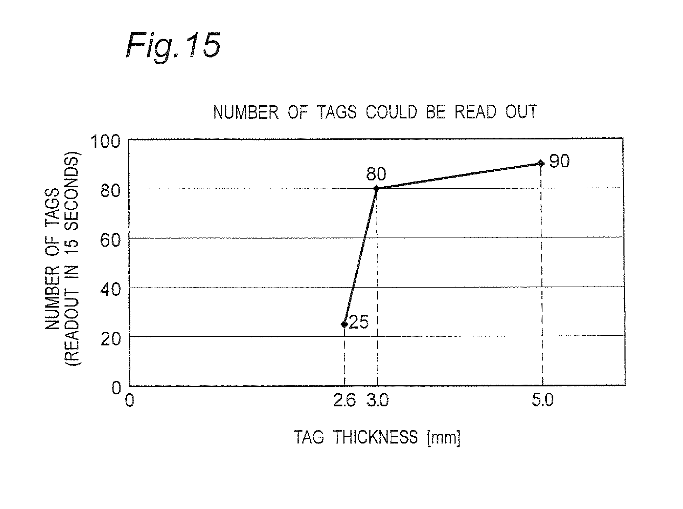

Fig. 15 shows a result of an IC tag 500 information readout experiment employing three different thicknesses of H. The horizontal axis represents a tag thickness H [mm] (thickness of the IC tag protecting structure 600 in a condition where the IC tag 500 is placed in it) and the vertical axis represents the number of the IC tags whose information could be read out by the IC tag reader. The experiment was conducted in such a manner that:
each of the IC tag protecting structures 600 was coordinated to have a thickness of H in a condition where the IC tag 500 was placed in the IC tag protecting structure 600;
each of the IC tag protecting structures 600 was attached to a randomly selected repair part;
the IC tag protecting structures 600 were packaged in a disorderly manner in a container, which is equivalent to the container 419;
the container was subjected to 15-seconds information readout process by a IC tag reader having performance equivalent to the IC tag readers (30 and 36) shown in Fig. 4; and
the number of the IC tags 500 whose information could be read out by the IC tag reader was counted. The rotating machine 35 was set to rotate one revolution in the horizontal plane in the information readout process. Further, the number of the repair parts put in the container (i.e., the number of the IC tags 500 and the IC tag protecting structures 600) was increased from 10 to 90 in increments of 10 so that the number of the IC tags whose information pieces were read out may be counted a number of times for each of nine kinds of quantities of contents.

In the case of the thickness H=2.6mm, it is concluded from results of a number of experiments that a minimum number of IC tags 500 whose information could be read out is 25. To be more precise, when 10 or 20 parts and the same number of IC tags attached thereto were placed in a container, all the tags could be read out. However, when 30 or more parts and the same number of IC tags attached thereto were contained, not all 1 the IC tags were read out and the number of IC tags whose information were read out varied depending on packaging conditions and the minimum of the number was 25. From this, it is learned that, in the case of H=2.6mm, when about 25 repair parts are packaged in a container, they can be read out completely.

In the case of the thickness H=3.0mm, it is concluded from the results of a number of experiments that a minimum number of IC tags 500 whose information could be read out is 80. To be more precise, when 10, 20, ..., or 80 parts and the same number of IC tags attached thereto were placed in the container, all the tags could be read out. However, when 90 parts and the same number of IC tags attached thereto were placed in the container, not all the IC tags were read out and the number of the IC tags whose information were read out varied depending on packaging conditions and the minimum of the number was 80. From this, it is learned that, in the case of H=3.0mm, when about 80 repair parts are packaged in a container, they can be read out completely.

In the case of the thickness H=5.0mm, it is concluded from results of a number of experiments that a minimum number of IC tags 500 whose information could be read out is 90. To be more precise, when 10, 20, ... , or 90 parts and the same number of IC tags attached thereto were placed in a container, all the IC tags could be read out. From this, it is learned that, in the case of H=5.0mm, when about 90 repair parts are packaged in a container, they can be read out completely.

From the result above, it can be known that by configuring the IC tag protecting structure 600 so that it may have the thickness H of at least 2.6mm, preferably at least 3.0mm, and more preferably 5.0mm in a condition where the IC tag 500 is placed in it and using the IC tag protecting structure 600 with the IC tag 500 as attached to a repair part with the IC tag 500 been placed in the IC tag protecting structure 600, certainty of reading out the IC tag information by the IC tag readers 30 and 36 or 130 and 36 increases drastically.

It is to be noted that the present embodiment can use a noncontact type IC tag (card) that employs a communication frequency not of the above-mentioned 2.45GHz frequency band, but of, for example, a 433MHz frequency band, 900MHz frequency band, or a 13.56MHz frequency band of an electromagnetic induction type, or a frequency band of 135kHz or less.

### <2-5. Summary>

The system according to the present embodiment can perform a process for incomings and outgoings of repair parts rapidly and correctly. It is thus possible to reduce loads on persons in charge of work and the number of these persons and is not necessary for using slips, thereby contributing to paperless work promotion. Preferably an IC tag used in the present invention can be reused, in which case preferably the rewritable layer may be such that information printed thereon can be visually recognized even after the information is repeatedly printed and erased a number of times. It is to be noted that an IC tag used in the present embodiment is capable of keeping up good visibility of the information even after repetitive print-and-erasures for 500 times or more. This is a good property that well attributes to suppressing of running cost. Furthermore, not only slip processing in a yard of a parts warehouse can be omitted but also slip processing between an area base point or a repair person in charge and the parts warehouse can be omitted, thereby reducing loads on each of the persons in charge. Therefore, the present system can contribute to improvements in total productivity of repair business.

Furthermore, the commodity incoming/outgoing management system of the present invention can develop an accurate prehension of a condition of a current stock through rapid processing and perform various operations without an unnecessary (surplus) stock. It is thus possible to maintain the stock at an appropriate level all the time, thereby contributing to a reduction in management cost.

### <3. Third Embodiment>

In this embodiment, an application to an accounting system of a retail store such as a supermarket, which runs unattended or with a minimum required number of persons.

### <3-1. System configuration>

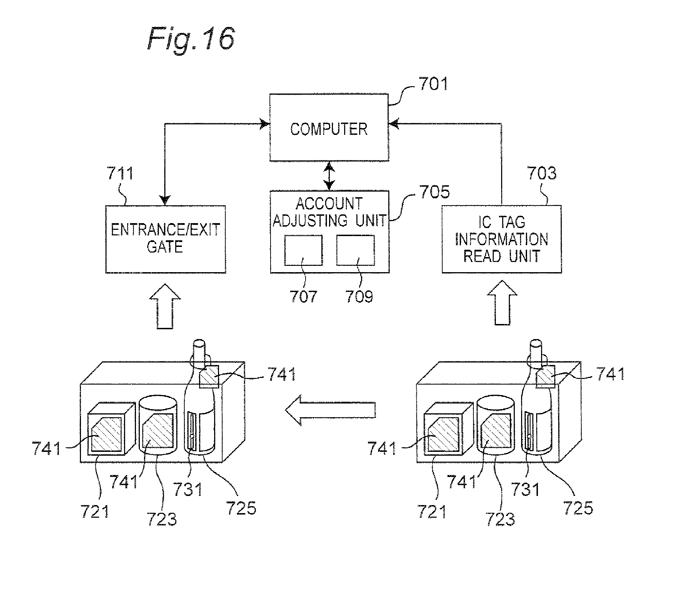

Fig. 16 shows an accounting system according to the third embodiment.
The present system includes:
an IC tag information write unit such as shown in Fig. 7;
an IC tag information read unit 703 which reads out information recorded in an in-store product IC tag 741 attached to a commodity (a product) which is to be bought or to be returned and information recorded in a product IC tag 731 applied to a product;
an account adjusting unit 705 which adjusts a transaction;
an entrance/exit gate 711 that manages a customer's entry into a store and his or her exit from the store; and
a computer 701 connected to these. The account adjusting unit 705 further has a display unit 707 which displays a transaction value and a money input/output unit 709 which transacts a transfer of money or adjusts card transactions. In the present system, the IC tag information write unit such as shown in Fig. 7 may be used to write information about a product (sales price etc.) into an IC chip in an in-store product IC tag 741 attached to a product. The in-store product IC tags 741 in which information is written may be attached to products by a store employee and laid out in the store. The IC tag information read unit 703 and the entrance/exit gate 711 are each equipped with an IC tag reader.

The product IC tag 731 may be applied to a commodity (a product) when it is manufactured so that information about the product (e.g., data for identifying a part number of the product, its recommended retail price, its expiration date, etc.) would be written beforehand. By doing so, a mistake in writing information about a commodity (a product) in the store can be prevented. Further, it can be used to inspect purchased commodities. It can be used also as information about a sales price when a retail store sells a product for its recommended retail price or sells the product for a discounted sales price which is set automatically from its recommended retail price, for example, the discounted retail price may be set to a price discounted 10% from its recommended retail price, thereby an input of a sales price can be omitted.

Further, information about an expiration date may be stored in a computer of a retail store so that, when there exists a product past or close to the expiration date and left unsold, a warning about that effect can be given. Further, if a product has a residual lapse of time before its expiration date less than a predetermined value, information to that effect may be given. By using that information and applying a discount seal to a product, sales can be promoted to reduce the expiring products left unsold, thereby reducing an amount of outdared products to be disposed of.

### (Example of database)

Next, a preferred configuration of a database well suited for use in the present embodiment is illustrated. This database stores individual numbers for identifying a product and also can store expiration dates and limits or time when 10% discount or 20% discount starts in a condition where they are related to the individual numbers. Database example
Individual No. |Expiration date |20% discount|10% discount 0001 |4.Jan.2006 13:00| 12 hours | 24 hours 0002 |3.Feb.2006 16:00| 24 hours| 48 hours (The individual numbers for sold products might as well be erased from the database as needed. Otherwise a "sold" flag etc. might as well be recorded.)
Further, by accessing the database in a predetermined lapse of time, the system can check conditions of the products and, at every interval, instructions to apply a label which indicates a change in a sales price (setup of a discount etc.) and its changed (discounted etc.) price to a product.

For example, the system can instruct a label printer to print a 10%-discount label (information that identifies a product and indicates "10% discount") for the product of the individual number 0001 at a time of 2006.1.3, 13:00. Further, the system can also instruct the label printer to print a 20%-discount label for the product with the individual number of 0001 at a time of 2006.1.4, 01:00. Furthermore, the system can print information which includes the effect of disposing of the product with the individual number of 0001 at a time of 2006.1.4, 13:00.

Further, the IC tag information read unit 703 may be configured to have a storage which can store a kind of a product (individual number) and its weight being correlated with each other or to be able to obtain information about a weight of a product from the corresponding product IC tag 731 or in-store product IC tag 741. Such a configuration may be given that the IC tag information read unit 703 may be provided with a weight-meter to measure a total weight of products mounted on the IC tag information read unit 703 and, based on information read out from the product IC tags 731 or the in-store product IC tags 741, the unit 703 may calculate a total weight of the products and can determine whether the tags are read out completely or not by comparing the calculated total weight to the measured total weight. Such a configuration may also be given that, if an actual measurement value (the measured total weight) is larger than a calculated total weight by at least a predetermined value, the unit 703 may determine that some of the IC tags 731 or 741 have not read yet and remains to be read and perform a confirmation operation by reading out all the tags 731 or 741 again or by manual verification. If the calculated total weight is larger than the actual measurement value by the said predetermined value at least or at least a different predetermined value, a malfunction of the weight measuring device (weight-meter), the IC tag reading device, or the IC tag is suspected, or an error in information stored in the IC tag or data of weight of each commodity is suspected, thereby enabling an investigation of its cause and a remediation of it.

### <3-2. Operation of system>

A customer goes through the store to gather desired products in his cart and then goes to a checkstand. The checkstand is equipped with the IC tag information read unit 703 and the account adjusting unit 705 so that the customer passes the cart through an IC tag reader (not shown) of the IC tag information read unit 703. The IC tag reader may be the IC tag readers 30 and 36 or 130 and 36 described with the preceding embodiments. The IC tag information read unit 703 reads out information recorded in the in-store product IC tags 741 and the product IC tags 731 included in the cart and sends the information to the computer 701. Further, the IC tag readers 30 and 36 or 131 and 36 may read out a customer card in which an IC chip and an antenna are sealed so that the customer can be identified. In the present embodiment, the in-store product IC tag 741 and the customer card may constitute a first identifier storage device and a second identifier storage device, respectively. Furthermore, the product IC tag 731 may constitute a third identifier storage device.

The computer 701 may store data about sales prices of products to calculate an amount of money required for a transfer of the products and display it on the display unit 707. The customer adjusts his or her account by letting his credit card, prepaid card, bank notes, or coins into the money input/output unit 709.

Correlating with information of adjusted in-store product IC tag 741, the computer 701 records information indicating a completion of its account adjustment in its storage device. Alternatively, an IC tag writer connected to the computer 701 may be further equipped at the checkstand to write information indicative of the completion of the adjustment in the IC chip of the in-store product IC tag 741.

The customer with the adjusted products passes through the entrance/exit gate 711 and exits the store. In this bout, the entrance/exit gate 711, which is equipped with the IC tag reader, reads out information in the in-store product IC tag 741 and the product IC tag 731 to confirm that they are already adjusted. If any one of the in-store product IC tags 741 is attached to the unadjusted products, a warning sound etc. is beeped or otherwise an appeal is made to a store clerk. Such configuration may be provided that the IC tags which are already adjusted are muted in order not to transmit information at a time of entry and exit.

The in-store product IC tag 741 refers to the one which is attached to a product in the store and used for an account adjustment. The in-store product IC tag 741 may be attached to a product by the store clerk and used in the account adjustment and may be the IC tag 500 and the IC tag protecting structure 600, for example. By using these, accuracy in the account adjustment is improved. The in-store product IC tags 741 may be collected by an appropriate methodology after the customers have exited the store. On the other hand, the product IC tag 731 is applied to a product when it is manufactured. The product IC tag 731 can be used in adjustment of a returned product such as a returnable bottle whose price is tacked on beforehand to a sales price and paid back when it is returned, for example.

### <3-3. Operation of the system in returning of products>

When a customer wants to return a product (e.g., a bottle 725), he or she causes the IC tag reader of the IC tag information read unit 703 to read out information of the product IC tag 731 of the bottle 725. When no information of the in-store product IC tag 741 is read out and only the information of the product IC tag 731 is read out, the computer 701 may recognize this reading as a returning process so that the product should be collected and, at the same time, pay a price to the customer from the money input/output unit 709 in the account adjusting unit 705.

### <3-4. Summary>

By the accounting system thus configured, a peopleless-checkstand is realized. It is further expected to greatly reduce the number of employees in the store.

### <4. Fourth Embodiment>

The following will illustrate the present embodiment that can be used for delivery and receipt of a commodity between a convenience store and a delivery center, for example.

### <4-1. System configuration>

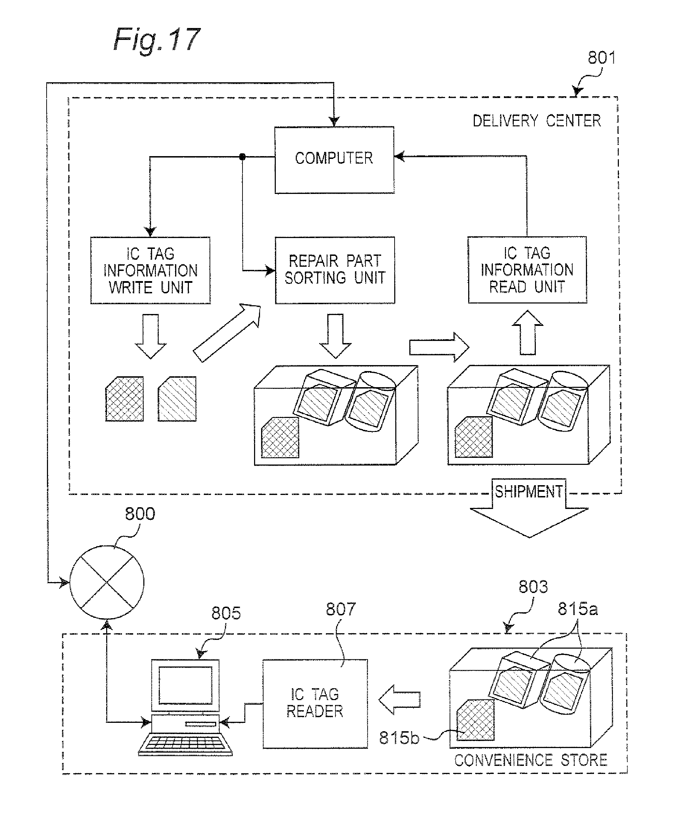

Fig. 17 is a block diagram of a configuration of the fourth embodiment. A configuration of a delivery center 801 may be equivalent to that of the repair parts warehouse of the parts management system described in the first and second embodiments. In a convenience store 803, the system has an IC tag reader 807 and a computer 805 connected thereto. The computer 805 is connected to a computer of the delivery center 801 via a network 800. In the present embodiment, information on product ordering is input into the computer in the delivery center 801 from the computer 805 in each of the convenience stores 803. The ordering information includes kinds and quantities of products and desired delivery dates, so that the delivery center 801 packages products in a container and delivers them to each of the convenience stores according to the ordering information. A product IC tag 815a is attached to each of the products and an outlet IC tag 815b indicative of a delivery destination outlet (store) is attached to the container. The product IC tag 815a and the outlet IC tag 815b constitute a first identifier storage device and a second identifier storage device, respectively.

An IC tag reader 807 is connected to the computer 805 of the convenience store 803. This IC tag reader 807 may be a large-sized IC tag reader such as the IC tag readers 30 and 36 or 130 and 36 or a portable IC tag reader.

### <4-2. Operation of system>

The IC tag reader 807 substantially simultaneously reads information of the outlet IC tag 815b of the container delivered from the delivery center 801 and information of the product IC tag 815a and sends the read information to the computer 805. The computer 805 checks whether the ordered products are contained in the container without excess or deficiency and transmits its result to the delivery center 801 via the network 800. If there is no excess or deficiency of the ordered products in the container, reception is confirmed through the transmission. It is also possible to transmit a receipt simultaneously. If the content include a product other than an ordered product or a deficient product exists, the delivery center 801 can immediately grasps it and subsequently makes an arrangement to collect the product or deliver an additional product.

### <5. Fifth Embodiment>

The following will illustrate an application of the system to a system which inspects types and quantities of parts used in a completed product at a commodity manufacturing line.

For example, many parts are used to manufacture an electric home appliance. A very large number of parts are used and are different according to the type of a product. Furthermore, it is impossible to verify that full and complete parts are appropriately used to manufacture a completed product by visually inspecting the completed product. Therefore, usually, appropriate manufacturing of a product is verified by confirming its operations.

However, especially at a manufacturing line where many types of products are manufactured with small lot for each product, there is a risk of using wrong parts to manufacture a product. For example, parts such as memories, which are standardized, may have uniform appearances and so that it may be impossible to distinguish rapidly their capacities, access speeds, etc.

To solve this problem, at the manufacturing line according to the present embodiment, an IC tag is attached to each of parts to be used in assembling a product and the resultant completed product is passed through an IC tag reader so that IC tags attached to used parts in the completed product may substantially simultaneously read our to identify types and quantities of the used parts and to grasp the quantities for each of the part, thereby checking whether the completed product has been manufactured properly or not.

### <5-1. System configuration>

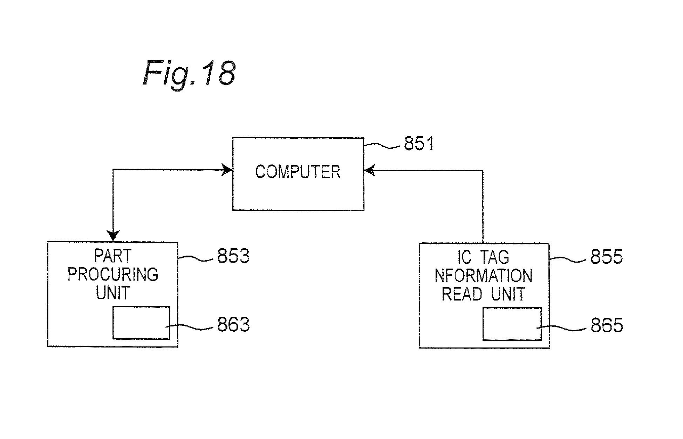

Fig. 18 is a block diagram of a completed product verification system of the present embodiment according to the present invention.
The present system includes:
a part procuring unit 853 that is arranged in a department which procures a part required to manufacture a product and write information into an IC tag and attaches the IC tag to the part;
an IC tag information read unit 855 that reads out information of the IC tag attached to the part included in a completed product to check the completed product; and
a computer 851 connected to these. The computer 851 manages a product to be manufactured and types and quantities of parts required to manufacture the product.

The part procuring unit 853 has a function to write information into an IC tag to be attached to a part and a function to combine a part and an IC tag into which the information is written and send them to a manufacturing line and may be equipped with, for example, an IC tag writer 863. The part procuring unit 853 constitutes an IC tag information write unit which writes information into an IC tag as shown in Fig. 7 and a part sorting unit.

The IC tag information read unit 855 is equipped with an IC tag reader 865. The IC tag reader 865 may be the IC tag readers 30 and 36 or 130 and 36 in the preceding embodiments. Alternatively, it may be an IC tag reader of any other form. Furthermore, sizes of the IC tag readers 30 and 36 and 130 and 36 may be changed so as to match completed products to be manufactured.

### <5-2. Operation of system>

The computer 851 sends parts group information to the part procuring unit 853 in order to prepare parts of a product to be manufactured. When having received the parts group information, the part procuring unit 853 makes up part IC tags to be attached to each of the parts written in the parts group information. In this case, information may be written not only into the IC tag but its printable surface of the IC tag. The IC tags made up for each of the parts may be attached to each part by a person in charge of this operation and sent to a manufacturing line not shown. The sent parts are assembled by a worker or a robot to complete a product. Further, the part procuring unit 853 may make up an article IC tag in which information for identifying the product to be assembled (article to be manufactured) is recorded and send the article IC tag to the manufacturing line together with the parts to which the part IC tags are attached. In this case, the part IC tag and the article IC tag constitute a first identifier storage device and a second identifier storage device, respectively.

The assembled product is sent to the IC tag information read unit 855.

The completed product passes through the IC tag reader 865 so that the information pieces of the respective IC tags attached to the parts of the completed product may be read out substantially simultaneously. Then, the information is S sent to the computer 851 to be cross-checked with the parts group information. If they match, it is determined that the completed product should have been assembled by using proper parts and, otherwise, determined that the product should be a waster. If the article IC tag is attached to the completed product, information of the article IC tag can be read out and utilized in cross-checking to identify the type of the completed product.

### <5-3. Summary>

The present system enables automatically verifying a completed product comprised of many parts, thereby reducing loads on workers. Further, it is possible to nondestructively verify types and quantities of parts which are used at where visual inspection is impossible.

In the present embodiment, the commodity incoming/outgoing management system according to the present invention manages types and quantities of parts introduced onto a line at the part procuring unit 853 and manages types and quantities of parts led out of the line at IC tag information read unit 855.

### <6. Sixth Embodiment>

The present invention can also be used to manage jobs of loading a truck with a package at a package distribution center of, for example, a parcel-delivery service industry.

### <6-1. System configuration>

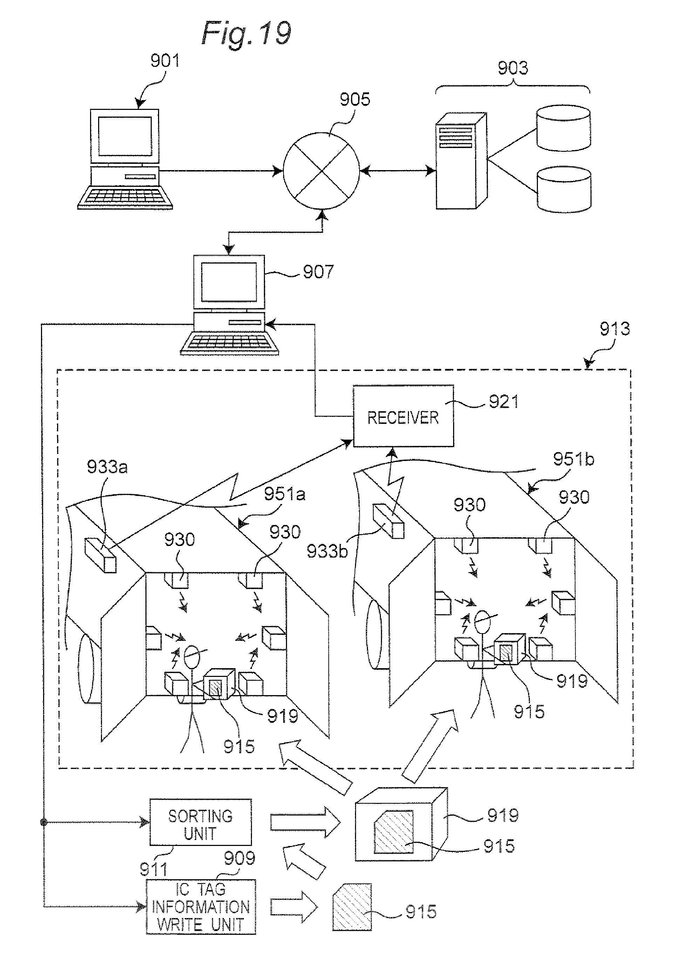

Fig. 19 is a schematic diagram of the configuration of the present embodiment. The present system includes:
an IC tag information write unit that writes information about a delivery destination, a delivery date/time, a delivery truck, etc. of a package 919 into a package IC tag 915;
a sorting unit 911 that attaches the package IC tag 915 to the package 919 and sends the package 919 to a delivery yard;
an IC tag information read unit 913 that reads out information recorded in the package IC tag 915 attached to the package 919 to be loaded onto a specified truck; and
a computer 907 which is connected to the IC tag information write unit 909, the sorting unit 911, and the IC tag information read unit 913. The computer 907 in a distribution center interconnects a computer 901 of a customer of a package delivery destination and a computer 901 of a package reception office and a central computer 903 through a network 905. The computer 907 can send and receive information to and from each of the computer 901 and the central computer 903. For example, the computer 907 can receive a package collection/delivery state inquiry from the computer 901 and respond to it. Further, the computer 907 can send information about a dynamics of the package to the central computer 903.

### <6-1. Operation of system>

The computer 907 receives information about a delivery destination, a delivery date/time, a delivery truck serving as delivery means, etc. of each of the packages from the central computer 903.

The computer 907 is connected to the IC tag information write unit 909, the sorting unit 911, and the IC tag information read unit 913. The IC tag information write unit 909 has an IC tag writer to write information about a delivery destination, a delivery date/time, a delivery truck, etc. received from the central computer 903 into the package IC tag 915. Further, simultaneously, the IC tag information write unit 909 can print these information pieces on a surface of the IC tag also.

The package IC tag 915 into which the information is written is sent to the sorting unit 911. At the sorting unit 911, a work person in charge applies the package IC tag 915 in which information about the package 919 is recorded to the package 919 and sends the tag and package to the IC tag information read unit 913.

The IC tag information read unit 913 has a receiver 921, which is connected to the computer 907. The receiver 921 can wirelessly transmit and receive information to and from each of an IC tag reader 930 and transmitters 933a and 933b.

When having been sent to the IC tag information read unit 913, the package IC tag 915 and the package 919 to which the tag 915 is attached are loaded into a designated delivery truck 951a or 951b by a loading person in charge. It is to be noted that the delivery trucks 951a and 951b serving as delivery means are each equipped with a plurality of IC tag readers 930 at its hatch so that information of the package IC tag 915 passing through the hatch can be read out automatically. The read information is wirelessly transmitted via the transmitters 933a and 933b so that radio waves for the information are received by the receiver 921. At the same time, the transmitters 933a and 933b transmit truck identification information for identifying the trucks 951a or 951b. The receiver 921 associates the information read out from the package IC tag 915 with the truck identification information and transmits them to the computer 907. It is to be noted that the package IC tag 915 and the transmitters 933a and 933b constitute a first identifier storage device and a second identifier storage devices, respectively.

The computer 907 can identify the truck into which the package 919 has been loaded to check whether the package 919 is loaded into the appropriate truck. If the package has been loaded into the wrong truck, a warning sound is produced to notify it to the loading person in charge, for example.

Further, when the package 919 is carried out of the truck at its delivery destination, information of the package IC tag 915 attached to the package 919 to be carried out is automatically read out and combined with the truck identification information held in the transmitter 933a and, by those information pieces combined together, the computer 907 catches up the carry-out of the package via, for example, a mobile phone.

The computer 907 may transmit the information to the central computer 903. The central computer 903 can manage the dynamics of the package in real time.

### <6-3. Summary>

By providing the plurality of IC tag readers 930 at a package load-in and carry-out hatch of each of the trucks 951a and 951b to enable automatically reading out information of the package IC tag 915, it is possible to read out information while the large package 919 is held by the delivery person in charge. Therefore, he or she only needs to perform ordinary operations, that is, load-in and carry-out operations of the package. No special operations are required to let the IC tag reader 930 read out the information recorded in the package IC tag 915. This is advantageous especially for a delivery person in charge who handles a large size package. In the present embodiment, the package 919 constitutes a commodity of which incoming and outgoing are managed by the system, while the truck which functions as delivery means constitute a case for housing the commodity.

Further, by using the package IC tag 915 in place of a slip related to its delivery, paperless work is enabled, thus contributing to protection of the environment. The package IC tag 915 may be reused.

### <7. Summary>

A commodity incoming/outgoing management system of the present invention can be used in various types of management operations. In any of the management operations, the system according to the present invention utilizes an IC tag in which information about a commodity under management is recorded so that a management of the commodity in an integrated fashion. The present system greatly improves the information management efficiency of the system compared to efficiency of a conventional system, which manages incoming and outgoing of a commodity at each department and uses a slip for communication between departments, thereby the present system produces effects on a processing speed improvement related to the management and the running cost saving. It is to be noted that to read "simultaneously" or "substantially simultaneously" means to read out information of IC tags which are present within an area where the information in the IC tags can be read out or to read a plurality of IC tags in a condition where they are recognized as those mutually correlated with.

### Industrial Applicability

A commodity incoming/outgoing management system according to the present invention is useful as a system that manages incoming and outgoing of a commodity where a variety of commodities are collected and shipped.

## Claims

1. A commodity incoming/outgoing management system for managing an incoming and an outgoing of a commodity, comprising:
a first identifier storage device that can be attached to the commodity and can store first information;
an information write unit that records the first information to said first identifier storage device;
a first information read unit that can read out the first information in said first identifier storage device which is attached to the commodity; and
a first information processing device that can receive the first information which is read out by said first information read unit and, based on the received information, process information about the incoming or the outgoing of the commodity to which said first identifier storage device is attached.

2. The commodity incoming/outgoing management system according to claim 1,
further comprising
a second identifier storage device that can be attached to a case which houses the commodity and can store second information,
wherein:
said information write unit records the second information to said second identifier storage device;
said first information read unit can read out the second information in said second identifier storage device which is attached to the case and the first information in said first identifier storage device which is attached to the commodity; and
said first information processing device can receive the first information and the second information which are read out by said first information read unit, based on the received information, process information about the incoming or the outgoing of the commodity to which said first identifier storage device is attached and associate the information about the incoming or the outgoing of the commodity with information about an incoming or an outgoing of the case to which said second identifier storage device is attached.

3. The commodity incoming/outgoing management system according to claim 1,
further comprising
a third identifier storage device that stores third information which indicates a return of the commodity to which said first identifier storage device is attached,
wherein
if said first information read unit reads out the third information of said third identifier storage device and the first information of said first identifier storage device, said first information processing device performs a return processing of the commodity to which said first identifier storage device is attached.

4. The commodity incoming/outgoing management system according to claim 1,
wherein
the first information includes delivery destination information about a delivery destination to which the commodity is to be delivered and commodity information which indicates a type of the commodity.

5. The commodity incoming/outgoing management system according to claim 4,
wherein
the second information includes delivery destination information about a delivery destination to be delivered to.

6. The commodity incoming/outgoing management system according to claim 5,
wherein
said first information processing device has information about a delivery destination to which the commodity is to be delivered and determines whether the delivery destination information of the first information read out by said information read unit agrees with the delivery destination information of the second information read out by said information read unit or not.

7. The commodity incoming/outgoing management system according to claim 6,
wherein
said first information processing device compares one or more pieces of the first information each of which is read out by said information read unit and has the same delivery destination information as delivery destination information of the second information which is read out by said information read unit to a group of first information comprised of one or more pieces of first information recorded in one or more first identifier storage devices having the same delivery destination information as the delivery destination information of the second information read out by said information read unit to determine whether one or more pieces of commodity information included in the one or more pieces of the first information agree with one or more pieces of commodity information included in the group of first information or not.

8. The commodity incoming/outgoing management system according to claim 1,
wherein
the first information includes a type and a sales price of the commodity to which said first identifier storage device is attached.

9. The commodity incoming/outgoing management system according to claim 1,
wherein
the first information includes information about a part which is used in a manufacturing line of a product and to which said first identifier storage device is attached.

10. The commodity incoming/outgoing management system according to claim 2, wherein:
the first information includes information about a delivery destination to which the commodity is to be delivered with said first identifier storage device attached and information about delivery means which serves for delivering the commodity; and
the second information includes information about the delivery means.

11. The commodity incoming/outgoing management system according to claim 2,
further comprising:
a second information processing device that is connected to said first information processing device and can access information about a commodity to be delivered and is disposed at a delivery destination of the commodity; and
a second information read unit that can read out the first information stored in said first identifier storage device and the second information stored in said second identifier storage device,
wherein
said second information processing device cross-checks the first information and the second information both of which are read out by said second information read unit with the information about a commodity to be delivered and sends a result of the cross-checking to said first information processing device.

12. The commodity incoming/outgoing management system according to claim 1,
further comprising
an account adjusting unit that displays an amount of money and transacts a transfer of money which corresponds to the amount of money,
wherein;
the first information is information about a price of the commodity; and
said first information processing device derives the amount of money required for an account adjustment based on the first information which is read out by said information read unit.

13. The commodity incoming/outgoing management system according to claim 1,
wherein
said first identifier storage device is a noncontact type IC tag having an IC chip unit and an antenna unit.

14. The commodity incoming/outgoing management system according to claim 13,
wherein
said first identifier storage device uses a radio wave of a 2.45 GHz frequency band in transmission and reception of information.

15. The commodity incoming/outgoing management system according to claim 14,
wherein:
said antenna unit of said first identifier storage device has directivity in transmission and reception of the radio wave; and
said first identifier storage device is housed in a structure for protecting said first identifier storage device so that, when the structure houses said first identifier storage device, the structure may have thicknesses of at least 1.5mm from a center of said antenna unit along a direction perpendicular to the directivity and may have a thickness of at least 3mm in the direction perpendicular to the directivity.

16. The commodity incoming/outgoing management system according to claim 1,
wherein:
said first information read unit has a tunnel like structure unit, an antenna on an inner wall surface of the tunnel like structure unit, and a portion on which an IC tag can be mounted;
the portion on which the IC tag is mounted can rotate in an approximate horizontal plane and rock to slant from the horizontal plane with the IC tag mounted on the portion; and
said first information read unit can read out information stored in the IC tag with the portion rotated and rocked.

17. The commodity incoming/outgoing management system according to claim 16,
further comprising
a reflector that is disposed on at least a part of the inner wall surface of the tunnel like structure unit,
wherein
the reflector can reflect a radio wave.

## Amended claims

### Amended claims under Art. 19.1 PCT

1. (Amended) A commodity incoming/outgoing management system for managing an incoming and an outgoing of a commodity, comprising:
a first identifier storage device that can be attached to the commodity and can store first information;
an information write unit that records the first information to said first identifier storage device;
a third identifier storage device that stores third information which indicates a return of the commodity to which said first identifier storage device is attached;
a first information read unit that can read out the first information in said first identifier storage device which is attached to the commodity and the third information in said third identifier storage device; and
a first information processing device that can receive the information which is read out by said first information read unit and, based on the information, process information about the incoming or the outgoing of the commodity to which said first identifier storage device is attached, wherein
if said first information read unit reads out the first information of said first identifier storage device and the third information of said third identifier storage device, said first information processing device performs a return processing of the commodity to which said first identifier storage device is attached.

2. (Amended) The commodity incoming/outgoing management system according to claim 1, further comprising
a second identifier storage device that can be attached to a case which houses the commodity and can store second information,
wherein:
said information write unit records the second information to said second identifier storage device;
said first information read unit can read out the second information in said second identifier storage device which is attached to the case; and
if said first information read unit reads out the first information in said first identifier storage device and the second information in said second identifier storage device, said first information processing device can receive the first information and the second information, based on the information, process information about the incoming or the outgoing of the commodity to which said first identifier storage device is attached, while associating the information about the incoming or the outgoing of the commodity with information about an incoming or an outgoing of the case to which said second identifier storage device is attached.

3. (Cancelled)

4. The commodity incoming/outgoing management system according to claim 1, wherein
the first information includes delivery destination information about a delivery destination to which the commodity is to be delivered and commodity information which indicates a type of the commodity.

5. (Amended) The commodity incoming/outgoing management system according to claim 4, wherein
the second information includes delivery destination information about a delivery destination to which the case is to be delivered.

6. (Amended) The commodity incoming/outgoing management system according to claim 5, wherein
said first information processing device determines whether the delivery destination information of the first information read out by said first information read unit agrees with the delivery destination information of the second information read out by said information read unit or not.

7. (Amended) The commodity incoming/outgoing management system according to claim 6, wherein
said first information processing device can store the commodity information and the delivery destination information of the commodity and determine whether the commodity information of the commodity of which delivery destination information is identical to the delivery destination information of the second information read out by said first information read unit agrees with the commodity information of the first information read out or not.

8. (Cancelled)

9. (Cancelled)

10. The commodity incoming/outgoing management system according to claim 2, wherein:
the first information includes information about a delivery destination to which the commodity is to be delivered with said first identifier storage device attached and information about delivery means which serves for delivering the commodity; and
the second information includes information about the delivery means.

11. The commodity incoming/outgoing management system according to claim 2, further comprising:
a second information processing device that is connected to said first information processing device and can access information about a commodity to be delivered and is disposed at a delivery destination of the commodity; and
a second information read unit that can read out the first information stored in said first identifier storage device and the second information stored in said second identifier storage device,
wherein
said second information processing device cross-checks the first information and the second information both of which are read out by said second information read unit with the information about a commodity to be delivered and sends a result of the cross-checking to said first information processing device.

12. (Amended) The commodity incoming/outgoing management system according to claim 1, further comprising
an account adjusting unit that displays an amount of money and transacts a transfer of money which corresponds to the amount of money,
wherein:
the first information is information about a price of the commodity;
the third information is information about an amount of money to be paid back when the commodity is returned; and
said first information processing device derives the amount of money required for an account adjustment based on at least of the first information and the third information which are read out by said first information read unit.

13. (Amended) A noncontact type IC tag having an IC chip unit and an antenna unit, wherein:
said noncontact type IC tag is housed in a structure; and
said structure in which said noncontact type IC tag is housed has thicknesses of at least 1.5mm from a center of said antenna unit in a direction perpendicular to a direction of a best radio wave reception performance of said antenna unit and has a thickness of at least 3mm in the perpendicular direction.

14. (Amended) The noncontact type IC tag according to claim 13, wherein
said noncontact type IC tag uses a radio wave of a 2.45 GHz frequency band in transmission and reception of information.

15. (Cancelled)

16. (Amended) An IC tag reader for reading out information stored in a noncontact type IC tag, comprising a portion on which the noncontact type IC tag can be mounted for the reading out information, said portion being capable of rotating in an approximate horizontal plane.

17. (Amended) The IC tag reader according to claim 16, further comprising
a tunnel like structure unit which covers at least a part of said portion and through which the noncontact type IC tag can pass,
wherein:
an antenna is disposed on an inner wall surface of said tunnel like structure unit; and
a reflector that can reflects a radio wave is disposed on at least a part of the inner wall surface of said tunnel like structure unit.

18. (Added) The IC tag reader according to claim 16,
wherein
said portion can rock to slant from the approximate horizontal plane with the noncontact type IC tag mounted on said the portion.

19. (Added) The IC tag reader according to claim 16,
wherein
said portion can reciprocate vertically with the noncontact type IC tag mounted on said portion.

20. (Added) The IC tag reader according to claim 16,
wherein
said portion can measure a weight of an object mounted on said portion.
